# EUROPEAN PATENT APPLICATION

(11) **EP 3 871 787 A1**
(43) Date of publication of application: **01.09.2021**
(21) Application number: 19875845.0
(22) Date of filing: 21.10.2019
(51) Int. Cl.: B03C 3/40, B03C 3/38

(54) **AIR DUST REMOVAL SYSTEM AND METHOD**

(30) Priority: 22.10.2018 CN 201811227550; 22.10.2018 CN 201811227573; 05.11.2018 CN 201811308119; 13.12.2018 CN 201811525874; 13.12.2018 CN 201811527816; 20.12.2018 CN 201811563797; 25.04.2019 CN 201910340445; 27.05.2019 CN 201910446294; 30.05.2019 CN 201910465124; 17.06.2019 CN 201910521796; 17.06.2019 CN 201910522488; 17.06.2019 CN 201910521793; 05.07.2019 CN 201910605156; 15.07.2019 CN 201910636710
(71) Applicant: Shanghai Bixiufu Enterprise Management Co., Ltd., Shanghai 201112 (CN)
(72) Inventor: TANG, Wanfu, Shanghai 201112 (CN); DUAN, Zhijun, Shanghai 201112 (CN); ZOU, Yongan, Shanghai 201112 (CN); XI, Yong, Shanghai 201112 (CN)
(74) Representative: Romano, Giuseppe
(86) International application number: PCT/CN2019/112352
(87) International publication number: WO 2020/083252

(57) **Abstract**

A method for reducing dust removal electric field couplings, comprising the following steps: selecting a ratio between a dust collection area of a dust removal electric field anode and a discharge area of a dust removal electric field cathode to be 1.667:1-1680:1. A dust removal electric field anode and/or dust removal electric field cathode size is selected so that the number of electric field couplings is less than or equal to 3. The number of electric field couplings is reduced, electric field energy consumption is low, electric field coupling consumption for an aerosol, water mist, oil mist and loose smooth particulate matter is reduced, and electric field energy is saved.

## Description

### Technical Field

The present invention belongs to the field of air purification, and it relates to an air dedusting system and method.

### Background Art

The layered air covers the earth's surface. Transparent, colorless and tasteless, it is mainly composed of nitrogen and oxygen, which has an important impact on human's survival and production.With the continuous improvement of people's living standard, people have gradually realized the importance of air quality.In the prior art, air dedusting is usually carried out by means of a filter screen.However, the effect of this method is not quite stable, and it also brings about high energy consumption which is easy to cause secondary pollution.

### Summary

In view of all of the above shortcomings of the prior art, the present invention aims at providing an air dedusting system and method for solving the problems of the prior art of dedusting systems, which are that air dedusting is not implemented efficiently.
The present invention, creatively using the ionization dedusting method to dedust the air, has no pressure difference and does not produce resistance to the air. Furthermore, it collects a wide range of pollutants in the air and boastsa stronger dedusting ability and higher dedusting efficiency.

In order to achieve the above objects and other relevant objects, the following examples are provided in the present invention:
1. Example 1 of the present invention provides an air dedusting system including andedusting system entrance, andedusting system exit, and an electric field device.
2. Example 2 of the present invention includes the features of Example 1, wherein the electric field device includes an electric field device entrance, an electric field device exit, andedusting electric field cathode, and andedusting electric field anode.The dedusting electric field cathode and the dedusting electric field anode are used to generate an ionization dedusting electric field.
3. Example 3 of the present invention includes the features of Example 2, wherein the dedusting electric field anode includes a first anode portion and a second anode portion.The first anode portion is close to the electric field device entrance, and the second anode portion is close to the electric field device exit.At least one cathode supporting plate is provided between the first anode portion and the second anode portion.
4. Example 4 of the present invention includes the features of Example 3, wherein the electric field device further includes an insulation mechanism configured to realize insulation between the cathode supporting plate and the dedusting electric field anode.
5. Example 5 of the present invention includes the features of Example 4, wherein an electric field flow channel is formed between the dedusting electric field anode and the dedusting electric field cathode, and the insulation mechanism is provided outside the electric field flow channel.
6. Example 6 of the present invention includes the features of Example 4 or 5, wherein the insulation mechanism includes an insulation portion and a heat-protection portion.The insulation portion is made of a ceramic material or a glass material.
7. Example 7 of the present invention includes the features of Example 6, wherein the insulation portion is an umbrella-shaped string ceramic column, an umbrella-shaped string glass column, a column-shaped string ceramic column or a column-shaped glass column, with the interior and exterior of the umbrella or the interior and exterior of the column being glazed.
8. Example 8 of the present invention includes the features of Example 7, wherein the distance between an outer edge of the umbrella-shaped string ceramic column or the umbrella-shaped string glass column and the dedusting electric field anode is greater than 1.4 times an electric field distance, the sum of the distances between the umbrella protruding edges of the umbrella-shaped string ceramic column or the umbrella-shaped string glass column is greater than 1.4times the insulation distance of the umbrella-shaped string ceramic column or the umbrella-shaped string glass column, and the total length of the inner depth of the umbrella edge of the umbrella-shaped string ceramic column or the umbrella-shaped string glass column is greater than 1.4 times the insulation distance of the umbrella-shaped string ceramic column or the umbrella-shaped string glass column.
9. Example 9 of the present invention includes the features of any one of Examples 3 to 8, wherein the length of the first anode portion accounts for 1/10 to 1/4, 1/4 to 1/3, 1/3 to 1/2, 1/2 to 2/3, 2/3 to 3/4 or 3/4to 9/10of the length of the dedusting electric field anode.
10. Example 10 of the present invention includes the features of any one of Examples 3 to 9, wherein the first anode portion has a sufficient length so as to eliminate a part of dust, reduce dust accumulated on the insulation mechanism and the cathode supporting plate, and reduce electrical breakdown caused by dust.
11. Example 11 of the present invention includes the features of any one of Examples 3 to 10, wherein the second anode portion includes a dust accumulation section and a reserved dust accumulation section.
12. Example 12 of the present invention includes the features of any one of Examples 2 to 11, wherein the dedusting electric field cathode includes at least one electrode bar.
13. Example 13 of the present invention includes the features of Example 12, wherein the electrode bar has a diameter of no more than 3mm.
14. Example 14 of the present invention includes the features of Example 12 or 13, wherein the electrode bar has a needle shape, a polygonal shape, a burr shape, a threaded rod shape, or a columnar shape.
15. Example 15 of the present invention includes the features of any one of Examples 2 to 14, wherein the dedusting electric field anode is composed of hollow tube bundles.
16. Example 16 of the present invention includes the features of Example 15, wherein a hollow cross section of the tube bundle of the dedusting electric field anode has a circular shape or a polygonal shape.
17. Example 17 of the present invention includes the features of Example 16, wherein the polygonal shape is a hexagonal shape.
18. Example 18 of the present invention includes the features of any one of Examples 14 to 17, wherein the tube bundle of the dedusting electric field anode has a honeycomb shape.
19. Example 19 of the present invention includes the features of any one of Examples 2 to 18, wherein the dedusting electric field cathode is provided in the dedusting electric field anode in a penetrating manner.
20. Example 20 of the present invention includes the features of any one of Examples 2 to 19, wherein when the dust is accumulated to a certain extent in the electric field, the electric field device performs a dedusting treatment.
21. Example 21 of the present invention includes the features of Example 20, wherein the electric field device detects an electric field current to determine whether the dust is accumulated to a certain extent and dedusting treatment is needed.
22. Example 22 of the present invention includes the features of Example 20 or 21, wherein the electric field device increases an electric field voltage to perform the dedusting treatment.
23. Example 23 of the present invention includes the features of Example 20 or 21, wherein the electric field device performs the dedusting treatment using an electric field back corona discharge phenomenon.
24. Example 24 of the present invention includes the features of Example 20 or 21, wherein the electric field device uses an electric field back corona discharge phenomenon, increases an electric field voltage, and restricts an injection currentto do dust cleaning.
25. Example 25 of the present invention includes the features of Example 20 or 21, wherein the electric field device uses an electric field back corona discharge phenomenon, increases an electric field voltage, and restricts an injectioncurrent so that rapid discharge occurring at a carbon deposition position of the anode generates plasmas, and the plasmas enable organic components of the dust to be deeply oxidized and break polymer bonds to form small molecular carbon dioxide and water, thus performing the dedusting treatment.
26. Example 26 of the present invention includes the features of any one of Examples 2 to 25, wherein the electric field device further includes an auxiliary electric field unit configured to generate an auxiliary electric field that is not parallel to the ionization dedusting electric field.
27. Example 27 of the present invention includes the features of any one of Examples 2 to 25, wherein the electric field device further includes an auxiliary electric field unit, the ionization dedusting electric field includes a flow channel, and the auxiliary electric field unit is configured to generate an auxiliary electric field that is not perpendicular to the flow channel.
28. Example 28 of the present invention includes the features of Example 26 or 27, wherein the auxiliary electric field unit includes a first electrode, and the first electrode of the auxiliary electric field unit is provided at or close to an entrance of the ionization dedusting electric field.
29. Example 29 of the present invention includes the features of Example 28, wherein the first electrode is a cathode.
30. Example 30 of the present invention includes the features of Example 28 or 29, wherein the first electrode of the auxiliary electric field unit is an extension of the dedusting electric field cathode.
31. Example 31 of the present invention includes the features of Example 30, wherein the first electrode of the auxiliary electric field unit and the dedusting electric field anode have an included angle α, wherein 0° < α≤125°, or 45°≤α≤125°, or 60°≤α≤100°, or α = 90°.
32. Example 32 of the present invention includes the features of any one of Examples 26 to 31, wherein the auxiliary electric field unit includes a second electrode, and the second electrode of the auxiliary electric field unit is provided at or close to an exit of the ionization dedusting electric field.
33. Example 33 of the present invention includes the features of Example 32, wherein the second electrode is an anode.
34. Example 34 of the present invention includes the features of Example 32 or 33, wherein the second electrode of the auxiliary electric field unit is an extension of the dedusting electric field anode.
35. Example 35 of the present invention includes the features of Example 34, wherein the second electrode of the auxiliary electric field unit and the dedusting electric field cathode have an included angle α, wherein 0° <α≤125°, or 45°α≤125°, or 60°≤α≤100°, or α = 90°.
36. Example 36 of the present invention includes the features of any one of Examples 26 to 29, 32 and 33, wherein electrodes of the auxiliary electric field and electrodes of the ionization dedusting electric field are provided independently of each other.
37. Example 37 of the present invention includes the features of any one of Examples 2 to 36, wherein the ratio of the dust accumulation area of the dedusting electric field anode to the discharge area of the dedusting electric field cathode is 1.667:1-1680:1.
38. Example 38 of the present invention includes the features of any one of Examples 2 to 36, wherein the ratio of the dust accumulation area of the dedusting electric field anode to the discharge area of the dedusting electric field cathode is 5.67:1-56.67:1.
39. Example 39 of the present invention includes the features of any one of Examples 2 to 38, wherein the dedusting electric field cathode has a diameter of 1-3 mm, the inter-electrode distance between the dedusting electric field anode and the dedusting electric field cathode is 2.5-139.9mm, and the ratio of the dust accumulation area of the dedusting electric field anode to the discharge area of the dedusting electric field cathode is 1.667:1-1680:1.
40. Example 40 of the present invention includes the features of any one of Examples 2 to 38, wherein the inter-electrode distance between the dedusting electric field anode and the dedusting electric field cathode is less than 150 mm.
41. Example 41 of the present invention includes the features of any one of Examples 2 to 38, wherein the inter-electrode distance between the dedusting electric field anode and the dedusting electric field cathode is 2.5-139.9 mm.
42. Example 42 of the present invention includes the features of any one of Examples 2 to 38, wherein the inter-electrode distance between the dedusting electric field anode and the dedusting electric field cathode is 5-100 mm.
43. Example 43 of the present invention includes the features of any one of Examples 2 to 42, wherein the dedusting electric field anode has a length of 10-180 mm.
44. Example 44 of the present invention includes the features of any one of Examples 2 to 42, wherein the dedusting electric field anode has a length of 60-180 mm.
45. Example 45 of the present invention includes the features of any one of Examples 2 to 44, wherein the dedusting electric field cathode has a length of 30-180 mm.
46. Example 46 of the present invention includes the features of any one of Examples 2 to 44, wherein the dedusting electric field cathode has a length of 54-176 mm.
47. Example 47 of the present invention includes the features of any one of Examples 37 to 46, wherein when running, the coupling time of the ionization dedusting electric field is ≤3.
48. Example 48 of the present invention includes the features of any one of Examples 2 to 46, wherein the ratio of the dust collection area of the dedusting electric field anode to the discharge area of the dedusting electric field cathode, the inter-electrode distance between the dedusting electric field cathode and the dedusting electric field anode, and the length of the dedusting electric field cathode that of and the dedusting electric field anodeenable the coupling time of the electric field to be ≤3.
49. Example 49 of the present invention includes the features of any one of Examples 2 to 48, wherein the value of the voltage of the ionization dedusting electric field is in the range of 1 kv-50 kv.
50. Example 50 of the present invention includes the features of any one of Examples 2 to 49, wherein the electric field device further includes a plurality of connection housings, and serially connected electric field stages are connected by the connection housings.
51. Example 51 of the present invention includes the features of Example 50, wherein the distance between adjacent electric field stages is greater than 1.4 times the inter-electrode distance.
52. Example 52 of the present invention includes the features of any one of Examples 2 to 51, wherein the electric field device further includes anfront electrode, and thefront electrode is between the electric field device entrance and the ionization dedusting electric field formed by the dedusting electric field anode and the dedusting electric field cathode.
53. Example 53 of the present invention includes the features of Example 52, wherein thefront electrode has a point shape, a linear shape, a net shape, a perforated plate shape, a plate shape, a needle rod shape, a ball cage shape, a box shape, a tubular shape, a natural shape of a substance, or a processed shape of a substance.
54. Example 54 of the present invention includes the features of Example 52 or 53, wherein thefront electrode is provided with anthrough hole.
55. Example 55 of the present invention includes the features of Example 54, wherein the through hole has a polygonal shape, a circular shape, an oval shape, a square shape, a rectangular shape, a trapezoidal shape, or a diamond shape.
56. Example 56 of the present invention includes the features of Example 54 or 55, wherein the through hole has a diameter of 0.1-3 mm.
57. Example 57 of the present invention includes the features of any one of Examples 52 to 56, wherein thefront electrode is in one or a combination of more states of solid, liquid, a gas molecular group, or a plasma.
58. Example 58 of the present invention includes the features of any one of Examples 52 to 57, wherein thefront electrode is an electrically conductive substance in a mixed state, a natural mixed electrically conductive substance of organism, or an electrically conductive substance formed by manual processing of an object.
59. Example 59 of the present invention includes the features of any one of Examples 52 to 58, wherein thefront electrode is 304 steel or graphite.
60. Example 60 of the present invention includes the features of any one of Examples 52 to 58, wherein thefront electrode is an ion-containing electrically conductive liquid.
61. Example 61 of the present invention includes the features of any one of Examples 52 to 60, wherein during working, before a gas carrying pollutants enters the ionization dedusting electric field formed by the dedusting electric field cathode and the dedusting electric field anode and when the gas carrying pollutants passes through thefront electrode, thefront electrode enables the pollutants in the gas to be charged.
62. Example 62 of the present invention includes the features of Example 61, wherein when the gas carrying pollutants enters the ionization dedusting electric field, the dedusting electric field anode applies an attractive force to the charged pollutants such that the pollutants move towards the dedusting electric field anode until the pollutants are attached to the dedusting electric field anode.
63. Example 63 of the present invention includes the features of Example 61 or 62, wherein thefront electrode directs electrons into the pollutants, and the electrons are transferred among the pollutants located between thefront electrode and the dedusting electric field anode to enable more pollutants to be charged.
64. Example 64 of the present invention includes the features of any one of Examples 61 to 63, wherein thefront electrode and the dedusting electric field anode conduct electrons therebetween through the pollutants and form a current.
65. Example 65 of the present invention includes the features of any one of Examples 61 to 64, wherein thefront electrode enables the pollutants to be charged by contacting the pollutants.
66. Example 66 of the present invention includes the features of any one of Examples 61 to 65, wherein thefront electrode enables the pollutants to be charged by energy fluctuation.
67. Example 67 of the present invention includes the features of any one of Examples 61 to 66, wherein thefront electrode is provided with anthrough hole.
68. Example 68 of the present invention includes the features of any one of Examples 52 to 67, wherein thefront electrode has a linear shape, and the dedusting electric field anode has a planar shape.
69. Example 69 of the present invention includes the features of any one of Examples 52 to 68, wherein thefront electrode is perpendicular to the dedusting electric field anode.
70. Example 70 of the present invention includes the features of any one of Examples 52 to 69, wherein thefront electrode is parallel to the dedusting electric field anode.
71. Example 71 of the present invention includes the features of any one of Examples 51 to 69, wherein thefront electrode has a curved shape or an arcuate shape.
72. Example 72 of the present invention includes the features of any one of Examples 52 to 71, wherein thefront electrode uses a wire mesh.
73. Example 73 of the present invention includes the features of any one of Examples 52 to 72, wherein a voltage between thefront electrode and the dedusting electric field anode is different from a voltage between the dedusting electric field cathode and the dedusting electric field anode.
74. Example 74 of the present invention includes the features of any one of Examples 52 to 73, wherein the voltage between thefront electrode and the dedusting electric field anode is lower than a corona inception voltage.
75. Example 75 of the present invention includes the features of any one of Examples 52 to 74, wherein the voltage between thefront electrode and the dedusting electric field anode is 0.1 kv/mm-2 kv/mm.
76. Example 76 of the present invention includes the features of any one of Examples 52 to 75, wherein the electric field device includes a flow channel, thefront electrode is located in the flow channel, and the cross-sectional area of thefront electrode to the cross-sectional area of the flow channel is 99%-10%, 90-10%, 80-20%, 70-30%, 60-40%, or 50%.
77. Example 77 of the present invention includes the features of any one of Examples 3 to 76, wherein the electric field device includes an electret element.
78. Example 78 of the present invention includes the features of Example 77, wherein when the dedusting electric field anode and the dedusting electric field cathode are powered on, the electret element is in the ionization dedusting electric field.
79. Example 79 of the present invention includes the features of Example 77 or 78, wherein the electret element is close to the electric field device exit, or the electret element is provided at the electric field device exit.
80. Example 80 of the present invention includes the features of any one of Examples 78 to 79, wherein the dedusting electric field anode and the dedusting electric field cathode form a flow channel, and the electret element is provided in the flow channel.
81. Example 81 of the present invention includes the features of Example 80, wherein the flow channel includes a flow channel exit, and the electret element is close to the flow channel exit, or the electret element is provided at the flow channel exit.
82. Example 82 of the present invention includes the features of Example 80 or 81, wherein the cross section of the electret element in the flow channel occupies 5%-100% of the cross section of the flow channel.
83. Example 83 of the present invention includes the features of Example 82, wherein the cross section of the electret element in the flow channel occupies 10%-90%, 20%-80%, or 40%-60% of the cross section of the flow channel.
84. Example 84 of the present invention includes the features of any one of Examples 77 to 83, wherein the ionization dedusting electric field charges the electret element.
85. Example 85 of the present invention includes the features of any one of Examples 77 to 84, wherein the electret element has a porous structure.
86. Example 86 of the present invention includes the features of any one of Examples 77 to 85, wherein the electret element is a textile.
87. Example 87 of the present invention includes the features of any one of Examples 77 to 86, wherein the dedusting electric field anode has a tubular interior, the electret element has a tubular exterior, and the dedusting electric field anode is disposed around the electret element like a sleeve.
88. Example 88 of the present invention includes the features of any one of Examples 77 to 87, wherein the electret element is detachably connected to the dedusting electric field anode.
89. Example 89 of the present invention includes the features of any one of Examples 77 to 88, wherein materials forming the electret element include an inorganic compound having electret properties.
90. Example 90 of the present invention includes the features of Example 89, wherein the inorganic compound is one or a combination of compounds selected from an oxygen-containing compound, a nitrogen-containing compound, and a glass fiber.
91. Example 91 of the present invention includes the features of Example 90, wherein the oxygen-containing compound is one or a combination of compounds selected from a metal-based oxide, an oxygen-containing complex, and an oxygen-containing inorganic heteropoly acid salt.
92. Example 92 of the present invention includes the features of Example 91, wherein the metal-based oxide is one or a combination of oxides selected from aluminum oxide, zinc oxide, zirconium oxide, titanium oxide, barium oxide, tantalum oxide, silicon oxide, lead oxide, and tin oxide.
93. Example 93 of the present invention includes the features of Example 91, wherein the metal-based oxide is aluminum oxide.
94. Example 94 of the present invention includes the features of Example 91, wherein the oxygen-containing complex is one or a combination of materials selected from titanium zirconium composite oxide and titanium barium composite oxide.
95. Example 95 of the present invention includes the features of Example 91, wherein the oxygen-containing inorganic heteropoly acid salt is one or a combination of salts selected from zirconium titanate, lead zirconate titanate, and barium titanate.
96. Example 96 of the present invention includes the features of Example 90, wherein the nitrogen-containing compound is silicon nitride.
97. Example 97 of the present invention includes the features of any one of Examples 77 to 96, wherein the materials forming the electret element include an organic compound having electret properties.
98. Example 98 of the present invention includes the features of Example 97, wherein the organic compound is one or a combination of compounds selected from fluoropolymers, polycarbonates, PP, PE, PVC, natural wax, resin, and rosin.
99. Example 99 of the present invention includes the features of Example 98, wherein the fluoropolymer is one or a combination of materials selected from polytetrafluoroethylene, fluorinated ethylene propylene, soluble polytetrafluoroethylene, and polyvinylidene fluoride.
100. Example 100 of the present invention includes the features of Example 98, wherein the fluoropolymer is polytetrafluoroethylene.
101. Example 101 of the present invention includes the features of any one of Examples 1 to 100 and further includes an equalizing device.
102. Example 102 of the present invention includes the features of Example 101, wherein the equalizing device is located between the dedusting system entrance and the ionization dedusting electric field formed by the dedusting electric field anode and the dedusting electric field cathode, and when the dedusting electric field anode is a square body, the equalizing device includes an inlet pipe located at one side of the dedusting electric field anode and an outlet pipe located at the other side, wherein the inlet pipe is opposite to the outlet pipe.
103. Example 103 of the present invention includes the features of Example 101, wherein the equalizing device is located between the dedusting system entrance and the ionization dedusting electric field formed by the dedusting electric field anode and the dedusting electric field cathode, and when the dedusting electric field anode is a cylinder, the equalizing device is composed of a plurality of rotatable equalizing blades.
104. Example 104 of the present invention includes the features of Example 101, wherein the equalizing device a first venturi plate equalizing mechanism and a second venturi plate equalizing mechanism provided at an outlet end of the dedusting electric field anode, the first venturi plate equalizing mechanism is provided with inlet holes, the second venturi plate equalizing mechanism is provided with outlet holes, and the inlet holes and the outlet holes are arranged in a staggered manner.In addition, a front surface is used for gas , and a side surface is used for gas discharge, forming a cyclone structure.
105. Example 105 of the present invention includes the features of any one of Examples 1to 104 and further includes an ozone removing device configured to remove or reduce ozone generated by the electric field device, with the ozone removing device being located between the electric field device exit and the dedusting system exit.
106. Example 106 of the present invention includes the features of Example 105, wherein the ozone removing device further includes an ozone digester.
107. Example 107 of the present invention includes the features of Example 106, wherein the ozone digester is at least one type of digester selected from an ultraviolet ozone digester and a catalytic ozone digester.
108. Example 108 of the present invention includes the features of any one of Examples 1 to 107 and further includes a centrifugal separation mechanism.
109. Example 109 of the present invention includes the features of Example 108, wherein the centrifugal separation mechanism includes an airflow diverting channel, and the airflow diverting channel is capable of changing the flow direction of airflow.
110. Example 110 of the present invention includes the features of Example 109, wherein the airflow diverting channel is capable of guiding a gas to flow in a circumferential direction.
111. Example 111 of the present invention includes the features of Example 108 to 109, wherein the airflow diverting channel has a spiral shape or a conical shape.
112. Example 112 of the present invention includes the features of any one of Examples 108 to 111, wherein the centrifugal separation mechanism includes a separation barrel.
113. Example 113 of the present invention includes the features of Example 112, wherein the separation barrel is provided therein with the airflow diverting channel, and a bottom portion of the separation barrel is provided with a dust exit.
114. Example 114 of the present invention includes the features of Example 112 or 113, wherein a gas inlet which communicates with a first end of the airflow diverting channel is provided on a side wall of the separation barrel.
115. Example 115 of the present invention includes the features of any one of Examples 112 to 114, wherein a gas outlet which communicates with a second end of the airflow diverting channel is provided in a top portion of the separation barrel.
116. Example 116 of the present invention is an air electric field dedusting method including the following steps:
   enabling a dust-containing gas to pass through an ionization dedusting electric field generated by andedusting electric field anode and andedusting electric field cathode; and
   performing a dust cleaning treatment when dust is accumulated in an electric field.
117. Example 117 of the present invention includes the features of the air electric field dedusting method of Example 116, wherein the dust cleaning treatment is completed using an electric field back corona discharge phenomenon.
118. Example 118 of the present invention includes the features of the air electric field dedusting method of Example 116, wherein an electric field back corona discharge phenomenon is utilized, a voltage is increased, and an injection current is restricted to complete the dust cleaning treatment.
119. Example 119 of the present invention includes the features of the air electric field dedusting method of Example 116, wherein an electric field back corona discharge phenomenon is utilized, a voltage is increased, and an injection current is restricted so that rapid discharge occurring at a deposition position of an anode generates plasmas, and the plasmas enable organic components of the dust to be deeply oxidized and break polymer bonds to form small molecular carbon dioxide and water, thus completing the dust cleaning treatment.
120. Example 120 of the present invention includes the features of the air electric field dedusting method of any one of Examples 116 to 119, wherein the dedusting electric field cathode includes at least one electrode bar.
121. Example 121 of the present invention includes the features of the air electric field dedusting method of Example 120, wherein the electrode bar has a diameter of no more than 3 mm.
122. Example 122 of the present invention includes the features of the air electric field dedusting method of Example 120 or 121, wherein the electrode bar has a needle shape, a polygonal shape, a burr shape, a threaded rod shape, or a columnar shape.
123. Example 123 of the present invention includes the features of the air electric field dedusting method of any one of Examples 116 to 122, wherein the dedusting electric field anode is composed of hollow tube bundles.
124. Example 124 of the present invention includes the features of the air electric field dedusting method of Example 123, wherein a hollow cross section of the tube bundle of the anode has a circular shape or a polygonal shape.
125. Example 125 of the present invention includes the features of the air electric field dedusting method of Example 124, wherein the polygonal shape is a hexagonal shape.
126. Example 126 of the present invention includes the features of the air electric field dedusting method of any one of Example 123 to 125, wherein the tube bundles of the dedusting electric field anode have a honeycomb shape.
127. Example 127 of the present invention includes the features of the air electric field dedusting method of any one of Example 116 to 126, wherein the dedusting electric field cathode is provided in the dedusting electric field anode in a penetrating manner.
128. Example 128 of the present invention includes the features of the air electric field dedusting method of any one of Examples 116 to 127, wherein the dust cleaning treatment is performed when a detected electric field current has increased to a given value.
129. Example 129 of the present invention provides a method for increasing oxygen for the air including the following steps:
   enabling the air to pass through a flow channel; and
   producing an electric field in the flow channel, wherein the electric field is not perpendicular to the flow channel, and the electric field includes an entrance and an exit.
130. Example 130 of the present invention includes the features of the method for increasing oxygen for the air of Example 129, wherein the electric field includes a first anode and a first cathode, the first anode and the first cathode form the flow channel, and the flow channel connects the entrance and the exit.
131. Example 131 of the present invention includes the features of the method for increasing oxygen for the air of any one of Examples 129 to 130, wherein the first anode and the first cathode ionize oxygen in the the air.
132. Example 132 of the present invention includes the features of the method for increasing oxygen for the air of any one of Examples 129 to 131, wherein the electric field includes a second electrode, and the second electrode is provided at or close to the entrance.
133. Example 133 of the present invention includes the features of the method for increasing oxygen for the air of Example 132, wherein the second electrode is a cathode.
134. Example 134 of the present invention includes the features of the method for increasing oxygen for the air of Example 132 or 133, wherein the second electrode is an extension of the first cathode.
135. Example 135 of the present invention includes the features of the method for increasing oxygen for the air of Example 134, wherein the second electrode and the first anode have an included angle α, wherein 0 °<α ≤ 125 °, or 45 ° ≤α≤125 °, or 60 °≤α ≤ 100 °, or α=90 °.
136. Example 136 of the present invention includes the features of the method for increasing oxygen for the air of any one of Examples 129 to 135, wherein the electric field includes a third electrode which is provided at or close to the exit.
137. Example 137 of the present invention includes the features of the method for increasing oxygen for the air of Example 136, wherein the third electrode is an anode.
138. Example 138 of the present invention includes the features of the method for increasing oxygen for the air of any one of Examples 136 to 137, wherein the third electrode is an extension of the first anode.
139. Example 139 of the present invention includes the features of the method for increasing oxygen for the air of Example 138, wherein the third electrode and the first cathode have an included angle α, wherein 0 °<α≤ 125 °, or 45 °≤α≤125 °, or 60 ° ≤ α≤100 °, or α=90 °.
140. Example 140 of the present invention includes the features of the method for increasing oxygen for the air of any one of Examples 134 to 139, wherein the third electrode is provided independently of the first anode and the first cathode.
141. Example 141 of the present invention includes the features of the method for increasing oxygen for the air of any one of Examples 132 to 140, wherein the second electrode is provided independently of the first anode and the first cathode.
142. Example 142 of the present invention includes the features of the method for increasing oxygen for the air of any one of Examples 130 to 141, wherein the first cathode includes at least one electrode bar.
143. Example 143 of the present invention includes the features of the method for increasing oxygen for the air of any one of Examples 130 to 142, wherein the first anode is composed of hollow tube bundles.
144. Example 144 of the present invention includes the features of the method for increasing oxygen for the air of Example 143, wherein a hollow cross section of the tube bundle of the anode has a circular shape or a polygonal shape.
145. Example 145 of the present invention includes the features of the method for increasing oxygen for the air of Example 144, wherein the polygonal shape is a hexagonal shape.
146. Example 146 of the present invention includes the features of the method for increasing oxygen for the air of any one of Examples 143 to 145, wherein the tube bundle of the first anode has a honeycomb shape.
147. Example 147 of the present invention includes the features of the method for increasing oxygen for the air of any one of Examples 130 to 146, wherein the first cathode is provided in the first anode in a penetrating manner.
148. Example 148 of the present invention includes the features of the method for increasing oxygen for the air of any one of Examples 130 to 147, wherein the electric field acts on oxygen ions in the flow channel, increases a flow rate of the oxygen ions, and increases the content of oxygen in the the air at the exit.
149. Example 149 of the present invention provides a method for reducing coupling of an the air dedusting electric field, including a step of:
   selecting a parameter of a dedusting electric field anode and/or a parameter of a dedusting electric field cathode so as to reduce the coupling time of the electric field.
150. Example 150 of the present invention includes the features of the method for reducing coupling of an the air dedusting electric field of Example 149 and further includes selecting the ratio of the dust collection area of the dedusting electric field anode to the discharge area of the dedusting electric field cathode.
151. Example 151 of the present invention includes the features of the method for reducing coupling of an the air dedusting electric field of Example 150 and further includes selecting the ratio of the dust accumulation area of the dedusting electric field anode to the discharge area of the dedusting electric field cathode to be 1.667:1-1680:1.
152. Example 152 of the present invention includes the features of the method for reducing coupling of an the air dedusting electric field of Example 150 and further includes selecting the ratio of the dust accumulation area of the dedusting electric field anode to the discharge area of the dedusting electric field cathode to be 6.67:1-56.67:1.
153. Example 153 of the present invention includes the features of the method for reducing coupling of an the air dedusting electric field of any one of Examples 149 to 152, wherein the dedusting electric field cathode has a diameter of 1-3 mm, and the inter-electrode distance between the dedusting electric field anode and the dedusting electric field cathode is 2.5-139.9 mm.The ratio of the dust accumulation area of the dedusting electric field anode to the discharge area of the dedusting electric field cathode is 1.667:1-1680:1.
154. Example 154 of the present invention includes the features of the method for reducing coupling of an the air dedusting electric field of any one of Examples 149 to 153 and further includes selecting the inter-electrode distance between the dedusting electric field anode and the dedusting electric field cathode to be less than 150 mm.
155. Example 155 of the present invention includes the features of the method for reducing coupling of an the air dedusting electric field of any one of Examples 149 to 153 and further includes selecting the inter-electrode distance between the dedusting electric field anode and the dedusting electric field cathode to be 2.5-139.9 mm.
156. Example 156 of the present invention includes the features of the method for reducing coupling of an the air dedusting electric field of any one of Examples 149 to 153 and further includes selecting the inter-electrode distance between the dedusting electric field anode and the dedusting electric field cathode to be 5-100 mm.
157. Example 157 of the present invention includes the features of the method for reducing coupling of an the air dedusting electric field of any one of Examples 149 to 156 and further includes selecting the dedusting electric field anode to have a length of 10-180 mm.
158. Example 158 of the present invention includes the features of the method for reducing coupling of an the air dedusting electric field of any one of Examples 149 to 156 and further includes selecting the dedusting electric field anode to have a length of 60-180 mm.
159. Example 159 of the present invention includes the features of the method for reducing coupling of an the air dedusting electric field of any one of Examples 149 to 158 and further includes selecting the dedusting electric field cathode to have a length of 30-180 mm.
160. Example 160 of the present invention includes the features of the method for reducing coupling of an the air dedusting electric field of any one of Examples 149 to 158 and further includes selecting the dedusting electric field cathode to have a length of 54-176 mm.
161. Example 161 of the present invention includes the features of the method for reducing coupling of an the air dedusting electric field of any one of Examples 149 to 160 and further includes selecting the dedusting electric field cathode to include at least one electrode bar.
162. Example 162 of the present invention includes the features of the method for reducing coupling of an the air dedusting electric field of Example 161 and further includes selecting the electrode bar to have a diameter of no more than 3 mm.
163. Example 163 of the present invention includes the features of the method for reducing coupling of an the air dedusting electric field of Example 161 or 162 and further includes selecting the electrode bar to havea needle shape, a polygonal shape, a burr shape, a threaded rod shape, or a columnar shape.
164. Example 164 of the present invention includes the features of the method for reducing coupling of an the air dedusting electric field of any one of Examples 149 to 163 and further includes selecting the dedusting electric field anode to be composed of hollow tube bundles.
165. Example 165 of the present invention includes the features of the method for reducing coupling of an the air dedusting electric field of Example 164 and further includes selecting a hollow cross section of the tube bundle of the anode to have a circular shape or a polygonal shape.
166. Example 166 of the present invention includes the features of the method for reducing coupling of an the air dedusting electric field of Example 165 and further includes selecting the polygonal shape to be a hexagonal shape.
167. Example 167 of the present invention includes the features of the method for reducing coupling of an the air dedusting electric field of any one of Examples 164 to 166 and further includes selecting the tube bundles of the dedusting electric field anode to havea honeycomb shape.
168. Example 168 of the present invention includes the features of the method for reducing coupling of an the air dedusting electric field of any one of Examples 149 to 167 and further includes selecting the dedusting electric field cathode to be provided in the dedusting electric field anode in a penetrating manner.
169. Example 169 of the present invention includes the features of the method for reducing coupling of an the air dedusting electric field of any one of Examples 149 to 168 and further includes the size selected for the dedusting electric field anode or/and the dedusting electric field cathode allowing the coupling time of the electric field to be ≤3.
170. Example 170 of the present invention provides an air dedusting method including the following steps:
   1) adsorbing particulates in air with an air ionization dedusting electric field; and
   2) charging an air electret element with the air ionization dedusting electric field.
171. Example 171 of the present invention includes the features of the air dedusting method of Example 170, wherein the air electret element is close to an air electric field device exit, or the air electret element is provided at the air electric field device exit.
172. Example 172 of the present invention includes the features of the air dedusting method of Example 170, wherein the air dedusting electric field anode and the air dedusting electric field cathode form an air flow channel, and the air electret element is provided in the air flow channel.
173. Example 173 of the present invention includes the features of the air dedusting method of Example 172, wherein the air flow channel includes an air flow channel exit, and the air electret element is close to the air flow channel exit, or the air electret element is provided at the air flow channel exit.
174. Example 174 of the present invention includes the features of the air dedusting method of any one of Examples 452 to 173, wherein when the air ionization dedusting electric field has no power-on drive voltage, the charged air electret element is used to adsorb particulates in the air.
175. Example 175 of the present invention includes the features of the air dedusting method of Example 173, wherein after adsorbing certain particulates in the air, the charged air electret element is replaced by a new air electret element.
176. Example 176 of the present invention includes the features of the air dedusting method of Example 175, wherein after replacement with the new air electret element, the air ionization dedusting electric field is restarted to adsorb particulates in the air and charge the new air electret element.
177. Example 177 of the present invention includes the features of the air dedusting method of any one of Examples 170 to 176, wherein materials forming the air electret element include an inorganic compound having electret properties.
178. Example 178 of the present invention includes the features of the air dedusting method of Example 177, wherein the inorganic compound is one or a combination of compounds selected from an oxygen-containing compound, a nitrogen-containing compound, and a glass fiber.
179. Example 179 of the present invention includes the features of the air dedusting method of Example 178, wherein the oxygen-containing compound is one or a combination of compounds selected from a metal-based oxide, an oxygen-containing complex, and an oxygen-containing inorganic heteropoly acid salt.
180. Example 180 of the present invention includes the features of the air dedusting method of Example 179, wherein the metal-based oxide is one or a combination of oxides selected from aluminum oxide, zinc oxide, zirconium oxide, titanium oxide, barium oxide, tantalum oxide, silicon oxide, lead oxide, and tin oxide.
181. Example 181 of the present invention includes the features of the air dedusting method of Example 179, wherein the metal-based oxide is aluminum oxide.
182. Example 182 of the present invention includes the features of the air dedusting method of Example 179, wherein the oxygen-containing complex is one or a combination of materials selected from titanium zirconium composite oxide and titanium barium composite oxide.
183. Example 183 of the present invention includes the features of the air dedusting method of Example 179, wherein the oxygen-containing inorganic heteropoly acid salt is one or a combination of salts selected from zirconium titanate, lead zirconate titanate, and barium titanate.
184. Example 184 of the present invention includes the features of the air dedusting method of Example 178, wherein the nitrogen-containing compound is silicon nitride.
185. Example 185 of the present invention includes the features of the air dedusting method of any one of Examples 170 to 176, wherein materials forming the air electret element include an organic compound having electret properties.
186. Example 186 of the present invention includes the features of the air dedusting method of Example 185, wherein the organic compound is one or a combination of compounds selected from fluoropolymers, polycarbonates, PP, PE, PVC, natural wax, resin, and rosin.
187. Example 187 of the present invention includes the features of the air dedusting method of Example 186, wherein the fluoropolymer is one or a combination of materials selected from polytetrafluoroethylene, fluorinated ethylene propylene, soluble polytetrafluoroethylene, and polyvinylidene fluoride (Note:polytetrafluoroethylene is mentioned twice in this paragraph) .
188. Example 188 of the present invention includes the features of the air dedusting method of Example 186, wherein the fluoropolymer is polytetrafluoroethylene.
189. Example 189 of the present invention provides an air dedusting method including a step of removing or reducing ozone generated by the ionization dedusting after the air which has undergone ionization dedusting.
190. Example 190 of the present invention includes the features of the air dedusting method of Example 189, wherein ozone digestion is performed on the ozone generated by the ionization dedusting.
191. Example 191 of the present invention includes the features of the air dedusting method of Example 189, wherein the ozone digestion is at least one type of digestion selected from ultraviolet digestion and catalytic digestion.

In the present invention, "air" generally refers to all kinds of gases.
FIG. 1 is a structural schematic diagram of an embodiment of an air dedusting system in an engine-based gas treatment system in the present invention.
FIG. 2 is a structural diagram of another embodiment of a first water filtering mechanism provided in an electric field device in the air dedusting system in the present invention.
FIG. 3A is an implementation structural diagram of an equalizing device of the electric field device in the air dedusting system in the present invention.
FIG. 3B is another implementation structural diagram of the equalizing device of the electric field device in the air dedusting system in the present invention.
FIG. 3C is a further implementation structural diagram of the equalizing device of the electric field device in the air dedusting system in the present invention.
FIG. 3D is a top structural diagram of a second venturi plate equalizing mechanism of the electric field device in the air dedusting system in the present invention.
FIG. 4 is a schematic diagram of an electric field device in Embodiment 2 of the present invention.
FIG. 5 is a schematic diagram of the electric field device in Embodiment 3 of the present invention.
FIG. 6 is a top view of the electric field device in FIG. 1 of the present invention.
FIG. 7 is a schematic diagram of the cross section of aflow channel occupied by the cross section of an electret element in the flow channel in Embodiment 3.
FIG. 8 is a schematic diagram of the air dedusting system in Embodiment 4 of the present invention.
FIG. 9 is a structural schematic diagram of an electric field generating unit.
FIG. 10 is a view taken along line A-A of the electric field generating unit in FIG. 9.
FIG. 11 is view taken along line A-A of the electric field generating unit in FIG. 9, with lengths and an angle being marked.
FIG. 12 is a structural schematic diagram of an electric field device having two electric field stages.
FIG. 13 is a structural schematic diagram of the electric field device in Embodiment 17 of the present invention.
FIG. 14 is a structural schematic diagram of the electric field device in Embodiment 19 of the present invention.
FIG. 15 is a structural schematic diagram of the electric field device in Embodiment 20 of the present invention.
FIG. 16 is a structural schematic diagram of the exhaust gas dedusting system in Embodiment 22 of the present invention.

### Detailed Description of Embodiments

The embodiments of the present invention are illustrated below with respect to specific embodiments. Those familiar with the art will be able to readily understand other advantages and effects of the present invention from the disclosure in the present specification.

It should be noted that structures, ratios, sizes, and the like shown in the drawings of the present specification are only used for cooperation with the disclosure of the specification so as to be understood and read by those familiar with the art, rather than being used to limit the conditions under which the present invention can be implemented. Thus, they have no substantive technical significance, and any structural modifications, changes of ratio relationships or size adjustment still fall within the scope that can be covered by the technical contents disclosed in the present invention without affecting the effects that can be produced by the present invention and the objects that can be achieved. Terms such as "upper", "lower", "left", "right", "middle" and "one (a, an)", and the like referred to in the present specification are merely for clarity of description rather than being intended to limit the implementable scope of the present invention, and changes or alterations of relative relationships thereof without substantial technical changes should also be considered as being within the implementable scope of the present invention.

In an embodiment of the present invention, the present invention provides an air dedusting system including a dedusting system enetrance, a dedusting system exit, an electric field device.

In an embodiment of the present invention, the air dedusting system includes a centrifugal separation mechanism. In an embodiment of the present invention, the centrifugal separation mechanism includes an airflow diverting channel that can change the flow direction of airflow. When a gas containing particulates flows through the airflow diverting channel, the flow direction of the gas will be changed, while particulates and the like in the gas will continue to move in the original directions under the action of inertia until colliding against a side wall of the airflow diverting channel, i.e., against an inner wall of the centrifugal separation mechanism, after which the particulates cannot continue to move in the original directions and fall down under the action of gravity. In this way, the particulates are separated from the gas.

In an embodiment of the present invention, the airflow diverting channel can guide the gas to flow in a circumferential direction. In an embodiment of the present invention, the airflow diverting channel may have a spiral shape or a conical shape. In an embodiment of the present invention, the centrifugal separation mechanism includes a separation barrel. The separation barrel is provided therein with the airflow diverting channel, and a bottom portion of the separation barrel can be provided with a dust exit. A side wall of the separation barrel can be provided with a gas inlet which communicates with a first end of the airflow diverting channel. A top portion of the separation barrel can be provided with a gas outlet which communicates with a second end of the airflow diverting channel. The gas outlet is also referred to as an exhaust port. The exhaust port can be sized according to the required amount of gas intake. After the gas flows from the gas inlet into the airflow diverting channel of the separation barrel, the gas will change from straight-line movement into circular (circumferential) movement, but the particulates in the gas will continue to move in a linear direction under the action of inertia until colliding against an inner wall of the separation barrel, after which the particulates cannot continue to flow along with the gas, and the particulates sink under the action of gravity. In this way, the particulates are separated from the gas. The particulates are finally discharged through the dust exit located in the bottom portion, and the gas is finally discharged from the exhaust port located in the top portion. In an embodiment of the present invention, an electric field device entrance communicates with the exhaust port of the centrifugal separation mechanism. A gas outlet of the separation barrel is located where the separation barrel is connected to the electric field device.

In an embodiment of the present invention, the centrifugal separation mechanism may have a bent structure. The centrifugal separation mechanism can be in one shape or a combination of shapes selected from a ring shape, a hollow square shape, a cruciform shape, a T shape, an L shape, a concave shape, and a folded shape. The airflow diverting channel of the centrifugal separation mechanism has at least one turning. When the gas flows through this turning, the flow direction of the gas will be changed, but the particulates in the gas will continue to move along the original direction under the action of inertia until the particulates collide against the inner wall of the centrifugal separation mechanism. After the collision, the particulates will sink under the action of gravity, and the particulates are separated from the gas and are finally discharged through a powder exit located at a lower end while the gas finally flows out through the exhaust port.

In an embodiment of the present invention, a first filtering layer can be provided at the exhaust port of the centrifugal separation mechanism. The first filtering layer may include a metal mesh, and the metal mesh may be provided perpendicular to an airflow direction. The metal mesh will filter the gas discharged through the exhaust port so as to filter out particulates that are still not separated from the gas.

In an embodiment of the present invention, the air dedusting system can include an equalizing device. The equalizing device is provided in front of the electric field device and can enable airflow entering the electric field device to uniformly pass through it.

In an embodiment of the present invention, the dedusting electric field anode of the electric field device can be a cubic body, and the equalizing device can include an inlet pipe located at one side of a cathode supporting plate and an outlet pipe located at the other side of the cathode supporting plate.The cathode supporting plate is located at an inlet end of the dedusting electric field anode, wherein the side on which the inlet pipe is mounted is opposite to the side on which the outlet pipe is mounted. The equalizing device can enable airflow entering the electric field device to uniformly pass through an electrostatic field.

In an embodiment of the present invention, the dedusting electric field anode may be a cylindrical body, the equalizing device is between the air dedusting system entrance and the ionization dedusting electric field formed by the dedusting electric field anode and the dedusting electric field cathode, and the equalizing device includes a plurality of equalizing blades rotating around a center of the electric field device entrance. The equalizing device can enable varied amounts of gas intake to uniformly pass through the electric field generated by the dedusting electric field anode and at the same time can keep a constant temperature and sufficient oxygen inside the dedusting electric field anode. The equalizing device can enable the airflow entering the electric field device to uniformly pass through an electrostatic field.

In an embodiment of the present invention, the equalizing device includes an air inlet plate provided at the inlet end of the dedusting electric field anode and an air outlet plate provided at an outlet end of the dedusting electric field anode. The air inlet plate is provided with inlet holes, the air outlet plate is provided with outlet holes, and the inlet holes and the outlet holes are arranged in a staggered manner, moreover. A front surface is used for gas intake, and a side surface is used for gas discharge, thereby forming a cyclone structure. The equalizing device can enable the airflow entering the electric field device to uniformly pass through an electrostatic field.

In an embodiment of the present invention, anair dedusting system may include andedusting system entrance, andedusting system exit, and an electric field device. In addition, in an embodiment of the present invention, the electric field device may include an electric field device entrance, an electric field device exit, and anfront electrode located between the electric field device entrance and the electric field device exit.When a gas flows through thefront electrode from the electric field device entrance, particulates and the like in the gas will be charged.

In an embodiment of the present invention, the electric field device includes anfront electrode, and thefront electrode is between the electric field device entrance and the ionization dedusting electric field formed by the dedusting electric field anode and the dedusting electric field cathode. When a gas flows through thefront electrode from the electric field device entrance, particulates and the like in the gas will be charged.

In an embodiment of the present invention, the shape of thefront electrode may be a point shape, a linear shape, a net shape, a perforated plate shape, a plate shape, a needle rod shape, a ball cage shape, a box shape, a tubular shape, a natural shape of a substance, or a processed shape of a substance. When thefront electrode has a porous structure, thefront electrode is provided with one or morethrough holes. In an embodiment of the present invention, eachthrough hole may have a polygonal shape, a circular shape, an oval shape, a square shape, a rectangular shape, a trapezoidal shape, or a diamond shape. In an embodiment of the present invention, the outline of eachthrough hole may have a size of 0.1-3 mm, 0.1-0.2 mm, 0.2-0.5 mm, 0.5-1 mm, 1-1.2 mm, 1.2-1.5 mm, 1.5-2 mm, 2-2.5 mm, 2.5-2.8 mm, or 2.8-3 mm.

In an embodiment of the present invention, thefront electrode may be in one or a combination of more states of a solid, a liquid, a gas molecular group, a plasma, an electrically conductive substance in a mixed state, a natural mixed electrically conductive of organism, or an electrically conductive substance formed by manual processing of an object. When thefront electrode is solid, a solid metal such as 304 steel or other solid conductor such as graphite can be used. When thefront electrode is a liquid, it may be an ion-containing electrically conductive liquid.

During working, before a gas carrying pollutants enters the ionization dedusting electric field formed by the dedusting electric field anode and the dedusting electric field cathode, and when the gas carrying pollutants passes through thefront electrode, thefront electrode enables the pollutants in the gas to be charged. When the gas carrying pollutants enters the ionization dedusting electric field, the dedusting electric field anode applies an attractive force to the charged pollutants such that the pollutants move towards the dedusting electric field anode until the pollutants are attached to the dedusting electric field anode.

In an embodiment of the present invention, thefront electrode directs electrons into the pollutants, and the electrons are transferred to among the pollutants located between thefront electrode and the dedusting electric field anode to enable more pollutants to be charged. Thefront electrode and the dedusting electric field anode conduct electrons therebetween through the pollutants and form a current.

In an embodiment of the present invention, thefront electrode enables the pollutants to be charged by contacting the pollutants.In an embodiment of the present invention, thefront electrode enables the pollutants to be charged by energy fluctuation.In an embodiment of the present invention, thefront electrode transfers the electrons to the pollutants by contacting the pollutants and enables the pollutants to be charged. In an embodiment of the present invention, thefront electrode transfers the electrons to the pollutants by energy fluctuation and enables the pollutants to be charged.

In an embodiment of the present invention, thefront electrode has a linear shape, and the dedusting electric field anode has a planar shape. In an embodiment of the present invention, thefront electrode is perpendicular to the dedusting electric field anode. In an embodiment of the present invention, thefront electrode is parallel to the dedusting electric field anode. In an embodiment of the present invention, thefront electrode has a curved shape or an arcuate shape. In an embodiment of the present invention, thefront electrode uses a wire mesh. In an embodiment of the present invention, the voltage between thefront electrode and the dedusting electric field anode is different from the voltage between the dedusting electric field cathode and the dedusting electric field anode. In an embodiment of the present invention, the voltage between thefront electrode and the dedusting electric field anode is lower than a corona inception voltage. The corona inception voltage is the minimal value of the voltage between the dedusting electric field cathode and the dedusting electric field anode. In an embodiment of the present invention, the voltage between thefront electrode and the dedusting electric field anode may be 0.1 kv/mm-2 kv/mm.

In an embodiment of the present invention, the electric field device includes a flow channel, and thefront electrode is located in the flow channel. In an embodiment of the present invention, the cross-sectional area of thefront electrode to the cross-sectional area of the flow channel is 99%-10%,90-10%,80-20%, 70-30%, 60-40%, or 50%. The cross-sectional area of thefront electrode refers to the sum of the areas of entity parts of thefront electrode along a cross section. In an embodiment of the present invention, thefront electrode carries a negative potential.

In an embodiment of the present invention, when a gas flows into the flow channel through the electric field device entrance, pollutants in the gas with relatively strong electrical conductivity, such as metal dust, mist drops, or aerosols, will be directly negatively charged when they contact thefront electrode or when their distance to thefront electrode reaches a certain range. Subsequently, all of the pollutants enter the ionization dedusting electric field with a gas flow.The dedusting electric field anode applies an attractive force to the negatively charged metal dust, mist drops, aerosols, and the like and enables the negatively charged pollutants to move towards the dedusting electric field anode until this part of the pollutants is attached to the dedusting electric field anode, thereby realizing collection of this part of the pollutants. The ionization dedusting electric field formed between the dedusting electric field anode and the dedusting electric field cathode obtains oxygen ions by ionizing oxygen in the gas, and the negatively charged oxygen ions, after being combined with common dust, enable common dust to be negatively charged.The dedusting electric field anode applies an attractive force to this part of the negatively charged dust and other pollutants and enables the pollutants such as dust to move towards the dedusting electric field anode until this part of the pollutants is attached to the dedusting electric field anode, thereby realizing collection of this part of the pollutants such as common dust such that all pollutants with relatively strong electrical conductivity and pollutants with relatively weak electrical conductivity in the gas are collected.The dedusting electric field anode can collect a wider variety of pollutants in the gas, and it has a stronger collecting capability and higher collecting efficiency.

In an embodiment of the present invention, the electric field device entrance communicates with the exhaust port of the separation mechanism.

In an embodiment of the present invention, the electric field device may include andedusting electric field cathode and andedusting electric field anode, and an ionization dedusting electric field is formed between the dedusting electric field cathode and the dedusting electric field anode. When a gas enters the ionization dedusting electric field, oxygen ions in the gas will be ionized, and a large number of charged oxygen ions will be formed. The oxygen ions are combined with dust and other particulates in the gas such that the particulates are charged, and the dedusting electric field anode applies an attractive force to the negatively charged particulates such that the particulates are attached to the dedusting electric field anode so as to eliminate the particulates in the gas.

In an embodiment of the present invention, the dedusting electric field cathode includes a plurality of cathode filaments. Each cathode filament may have a diameter of 0.1 mm-20 mm.This dimensional parameter is adjusted according to application situations and dust accumulation requirements. In an embodiment of the present invention, each cathode filament has a diameter of no more than 3 mm. In an embodiment of the present invention, the cathode filaments are metal wires or alloy filaments which can easily discharge electricity, are resistant to high temperatures, are capable of supporting their own weight, and are electrochemically stable. In an embodiment of the present invention, titanium is selected as the material of the cathode filaments. The specific shape of the cathode filaments is adjusted according to the shape of the dedusting electric field anode.For example, if a dust accumulation surface of the dedusting electric field anode is a flat surface, the cross section of each cathode filament is circular.If a dust accumulation surface of the dedusting electric field anode is an arcuate surface, the cathode filament needs to be designed to have a polyhedral shape. The length of the cathode filaments is adjusted according to the dedusting electric field anode.

In an embodiment of the present invention, the dedusting electric field cathode includes a plurality of cathode bars. In an embodiment of the present invention, each cathode bar has a diameter of no more than 3 mm. In an embodiment of the present invention, the cathode bars are metal bars or alloy bars which can easily discharge electricity. Each cathode bar may have a needle shape, a polygonal shape, a burr shape, a threaded rod shape, or a columnar shape. The shape of the cathode bars can be adjusted according to the shape of the dedusting electric field anode.For example, if a dust accumulation surface of the dedusting electric field anode is a flat surface, the cross section of each cathode bar needs to be designed to have a circular shape.If a dust accumulation surface of the dedusting electric field anode is an arcuate surface, each cathode bar needs to be designed to have a polyhedral shape.

In an embodiment of the present invention, the dedusting electric field cathode is provided in the dedusting electric field anode in a penetrating manner.

In an embodiment of the present invention, the dedusting electric field anode includes one or more hollow anode tubes provided in parallel. When there is a plurality of hollow anode tubes, all of the hollow anode tubes constitute a honeycomb-shapeddedusting electric field anode. In an embodiment of the present invention, the cross section of each hollow anode tube may be circular or polygonal. If the cross section of each hollow anode tube is circular, a uniform electric field can be formed between the dedusting electric field anode and the dedusting electric field cathode, and dust is not easily accumulated on the inner walls of the hollow anode tubes. If the cross section of each hollow anode tube is triangular, 3 dust accumulation surfaces and 3 distant-angledust holding corners can be formed on the inner wall of the hollow anode tube, and the hollow anode tube with such a structure has the highest dust holding rate. If the cross section of each hollow anode tube is quadrilateral, 4 dust accumulation surfaces and 4 dust holding corners can be formed, but the assembled structure is unstable. If the cross section of each hollow anode tube is hexagonal, 6 dust accumulation surfaces and 6 dust holding corners can be formed, and the dust accumulation surfaces and the dust holding rate reach a balance. If the cross section of each hollow anode tube is polygonal, more dust accumulation edges can be obtained, but the dust holding rate is sacrificed. In an embodiment of the present invention, an inscribed circle inside each hollow anode tube has a diameter in the range of 5 mm-400 mm.

In an embodiment of the present invention, the dedusting electric field cathode is mounted on a cathode supporting plate, and the cathode supporting plate is connected with the dedusting electric field anode through an insulation mechanism. The insulation mechanism is configured to realize insulation between the cathode supporting plate and the dedusting electric field anode. In an embodiment of the present invention, the dedusting electric field anode includes a first anode portion and a second anode portion.Namely, the first anode portion is close to the electric field entrance, and the second anode portion is close to the electric field device exit. The cathode supporting plate and the insulation mechanism are between the first anodeportion and the second anode portion.Namely, the insulation mechanism is mounted in the middle of the ionization electric field or in the middle of the dedusting electric field cathode, it can serve well the function of supporting the dedusting electric field cathode, and it functions to fix the dedusting electric field cathode with respect to the dedusting electric field anode such that a set distance is maintained between the dedusting electric field cathode and the dedusting electric field anode. In the prior art, the support point of a cathode is at an end point of the cathode, and the distance between the cathode and an anode cannot be reliably maintained. In an embodiment of the present invention, the insulation mechanism is provided outside a dedusting flow channel, i.e., outside a second-stage electric field flow channel so as to prevent or reduce aggregation of dust and the like in the gas on the insulation mechanism, which can cause breakdown or electrical conduction of the insulation mechanism.

In an embodiment of the present invention, the insulation mechanism uses a ceramic insulator which is resistant to high pressure for insulation between the dedusting electric field cathode and the dedusting electric field anode. The dedusting electric field anode is also referred to as a housing.

In an embodiment of the present invention, the first anode portion is located in front of the cathode supporting plate and the insulation mechanism in a gas flow direction, and the first anode portion can remove water in the gas, thus preventing water from entering the insulation mechanism to cause short circuits and ignition of the insulation mechanism.In addition, the first anode portion can remove a considerable part of dust in the gas, and when the gas passes through the insulation mechanism, a considerable part of dust has been removed, thus reducing the possibility of short circuits of the insulation mechanism caused by the dust. In an embodiment of the present invention, the insulation mechanism includes an insulating porcelain pillar. The design of the first anode portion is mainly for the purpose of protecting the insulating porcelain pillar against pollution by particulates and the like in the gas, since once the gas pollutes the insulating porcelain pillar, it will cause breakover of the dedusting electric field anode and the dedusting electric field cathode, thus disabling the dust accumulation function of the dedusting electric field anode. Therefore, the design of the first anode portion can effectively reduce pollution of the insulating porcelain pillar and increase the service life of the product. In a process in which the gas flows through a second-stage electric field flow channel, the first anode portion and the dedusting electric field cathode first contact the polluting gas, and then the insulation mechanism contacts the gas, achieving the purpose of first removing dust and then passing through the insulation mechanism, reducing the pollution of the insulation mechanism, prolonging the cleaning maintenance cycle, and insulation mechanism support after use of the corresponding electrodes. The first anode portion has a sufficient length so as to remove a part of the dust, reduce the dust accumulated on the insulation mechanism and the cathode supporting plate, and reduce electric breakdown caused by the dust. In an embodiment of the present invention, the length of the first anode portion accounts for 1/10 to 1/4, 1/4 to 1/3, 1/3 to 1/2, 1/2 to 2/3, 2/3 to 3/4, or 3/4 to 9/10 of the total length of the dedusting electric field anode.

In an embodiment of the present invention, the second anode portion is located behind the cathode supporting plate and the insulation mechanism in a gas flow direction. The second anode portion includes a dust accumulation section and a reserved dust accumulation section, wherein the dust accumulation section adsorbs particulates in the gas utilizing static electricity.This dust accumulation section is for the purpose of increasing the dust accumulation area and prolonging the service life of the electric field device. The reserved dust accumulation section can provide fault protection for the dust accumulation section. The reserved dust accumulation section aims at further increasing the dust accumulation area and improving the dedusting effect in order to meet the design dedusting requirements. The reserved dust accumulation section is used for supplementing dust accumulation in the front section. In an embodiment of the present invention, the first anode portion and the second anode portion may use different power supplies.

In an embodiment of the present invention, as there is an extremely high potential difference between the dedusting electric field cathode and the dedusting electric field anode, the insulation mechanism is provided outside the second-stage electric field flow channel between the dedusting electric field cathode and the dedusting electric field anode in order to prevent breakover of the dedusting electric field cathode and the dedusting electric field anode. Therefore, the insulation mechanism is suspended outside the dedusting electric field anode. In an embodiment of the present invention, the insulation mechanism may be made of a non-conductive, temperature-resistant material such as a ceramic or glass. In an embodiment of the present invention, insulation with a completely air-free material requires an isolation thickness of > 0.3 mm/kv for insulation, while air insulation requires > 1.4 mm/kv. The insulation distance can be set to 1.4 times the inter-electrode distance between the dedusting electric field cathode and the dedusting electric field anode. In an embodiment of the present invention, the insulation mechanism is made of a ceramic with a glazed surface.No glue or organic material filling can be used for connection so that the mechanism will be resistant to temperatures greater than 350 °C.

In an embodiment of the present invention, the insulation mechanism includes an insulation portion and a heat-protection portion. In order to enable the insulation mechanism to have an anti-fouling function, the insulation portion is made of a ceramic material or a glass material. In an embodiment of the present invention, the insulation portion may be an umbrella-shaped string ceramic column or glass column, with the interior and exterior of the umbrella being glazed. The distance between an outer edge of the umbrella-shaped string ceramic column or glass column and the dedusting electric field anode is greater than 1.4 times the electric field distance, i.e., it is greater than 1.4 times the inter-electrode distance. The sum of the distances between the umbrella protruding edges of the umbrella-shaped string ceramic column or glass column is greater than 1.4 times the insulation distance of the umbrella-shaped string ceramic column. The total length of the inner depth of the umbrella edge of the umbrella-shaped string ceramic column or glass column is greater than 1.4 times the insulation distance of the umbrella-shaped string ceramic column. The insulation portion may also be a column-shaped string ceramic column or a glass column, with the interior and exterior of the column being glazed. In an embodiment of the present invention, the insulation portion may also have a tower-like shape.

In an embodiment of the present invention, the insulation portion is provided therein with a heating rod.When the temperature around the insulation portion is close to the dew point, the heating rod is started and heats up. Due to the temperature difference between the inside and outside of the insulation portion in use, condensation is easily created inside and outside the insulation portion. An outer surface of the insulating portion may spontaneously or be heated by gas to generate high temperatures. Necessary isolation and protection are required to prevent burns. The heat-protection portion includes a protective enclosure baffle and a denitration purification reaction chamber located outside the insulation portion. In an embodiment of the present invention, the location on a tail portion of the insulation portion that needs condensation also needs heat insulation to prevent the environment and heat radiation at a high temperature from heating a condensation component.

In an embodiment of the present invention, a lead-out wire of a power supply of the electric field device is connected by passing through a wall using an umbrella-shaped string ceramic column or glass column.The cathode supporting plate is connected inside the wall using a flexible contact, an airtight insulation protective wiring cap is used outside the wall for plug-in connection, and the insulation distance between a lead-out wire conductor running through the wall and the wall is greater than the ceramic insulation distance of the umbrella-shaped string ceramic column or glass column. In an embodiment of the present invention, a high-voltage part without a lead wire is directly installed on an end socket to ensure safety, the overall external insulation of a high-voltage module has an IP (Ingress Protection) Rating of 68, and heat is exchanged and dissipated by a medium.

In an embodiment of the present invention, the dedusting electric field cathode and the dedusting electric field anode are asymmetric with respect to each other. In a symmetric electric field, polar particles are subjected to forces of the same magnitude but in opposite directions, and the polar particles reciprocate in the electric field.In an asymmetric electric field, polar particles are subjected to forces of different magnitudes, and the polar particles move towards the direction with a greater force, thereby avoiding the generation of coupling.

An ionization dedusting electric field is formed between the dedusting electric field cathode and the dedusting electric field anode of the electric field device in the present invention. In order to reduce occurrence of electric field coupling of the ionization dedusting electric field, in an embodiment of the present invention, a method for reducing electric field coupling includes a step of selecting the ratio of the dust collection area of the dedusting electric field anode to the discharge area of the dedusting electric field cathode to enable the coupling time of the electric field to be ≤3. In an embodiment of the present invention, the ratio of the dust collection area of the dedusting electric field anode to the discharge area of the dedusting electric field cathode may be 1.667:1-1680:1, 3.334:1-113.34:1, 6.67:1-56.67:1, or 13.34:1-28.33:1. In this embodiment, a relatively large dust collection area of the dedusting electric field anode and a relatively extremely small discharge area of the dedusting electric field cathode are selected. By specifically selecting the above area ratios, the discharge area of the dedusting electric field cathode can be reduced to decrease the suction force, and enlarging the dust collection area of the dedusting electric field anode increases the suction force.Namely, an asymmetric electrode suction is generated between the dedusting electric field cathode and the dedusting electric field anode such that the dust, after being charged, falls onto a dust collecting surface of the dedusting electric field anode. Although the polarity of the dust has been changed, it can no longer be sucked away by the dedusting electric field cathode, thus reducing electric field coupling and realizing a coupling time of the electric field of≤3. Thus, when the inter-electrode distance of the electric field is less than 150 mm, the coupling time of the electric field is ≤3, the energy consumption by the electric field is low, and coupling consumption of the electric field to aerosols, water mist, oil mist, and loose smooth particulates can be reduced, thereby saving the electric energy of the electric field by 30-50%. The dust collection area refers to the area of a working surface of the dedusting electric field anode.For example, if the dedusting electric field anode has the shape of a hollow regular hexagonal tube, the dust collection area is just the inner surface area of the hollow regular hexagonal tube.The dust collection area is also referred to as a dust accumulation area. The discharge area refers to the area of a working surface of the dedusting electric field cathode.For example, if the dedusting electric field cathode has a rod shape, the discharge area is just the outer surface area of the rod shape.

In an embodiment of the present invention, the dedusting electric field anode may have a length of 10-180 mm, 10-20 mm, 20-30 mm, 60-180 mm, 30-40 mm, 40-50 mm, 50-60 mm, 60-70 mm, 70-80 mm, 80-90 mm, 90-100 mm, 100-110 mm, 110-120 mm, 120-130 mm, 130-140 mm, 140-150 mm, 150-160 mm, 160-170 mm, 170-180 mm, 60 mm, 180 mm, 10 mm or 30 mm. The length of the dedusting electric field anode refers to a minimal length of the working surface of the dedusting electric field anode from one end to the other end. By selecting such a length for the dedusting electric field anode, electric field coupling can be effectively reduced.

In an embodiment of the present invention, the dedusting electric field anode may have a length of 10-90 mm, 15-20 mm, 20-25 mm, 25-30 mm, 30-35 mm, 35-40 mm, 40-45 mm, 45-50 mm, 50-55 mm, 55-60 mm, 60-65 mm, 65-70 mm, 70-75 mm, 75-80 mm, 80-85 mm, or 85-90 mm.The design of such a length can enable the dedusting electric field anode and the electric field device to have resistance to high temperatures and allows the electric field device to have a high-efficiency dust collecting capability under the impact of high temperatures.

In an embodiment of the present invention, the dedusting electric field cathode may have a length of 30-180 mm, 54-176 mm, 30-40 mm, 40-50 mm, 50-54 mm, 54-60 mm, 60-70 mm, 70-80 mm, 80-90 mm, 90-100 mm, 100-110 mm, 110-120 mm, 120-130 mm, 130-140 mm, 140-150 mm, 150-160 mm, 160-170 mm, 170-176 mm, 170-180 mm, 54 mm, 180 mm, or 30 mm. The length of the dedusting electric field cathode refers to a minimal length of the working surface of the dedusting electric field cathode from one end to the other end. By selecting such a length for the dedusting electric field cathode, electric field coupling can be effectively reduced.

In an embodiment of the present invention, the dedusting electric field cathode may have a length of 10-90 mm, 15-20 mm, 20-25 mm, 25-30 mm, 30-35 mm, 35-40 mm, 40-45 mm, 45-50 mm, 50-55 mm, 55-60 mm, 60-65 mm, 65-70 mm, 70-75 mm, 75-80 mm, 80-85 mm or 85-90 mm. The design of such a length can enable the dedusting electric field cathode and the electric field device to have resistance to high temperatures and allows the electric field device to have a high-efficiency dust collecting capability under the impact of high temperatures.

In an embodiment of the present invention, the distance between the dedusting electric field anode and the dedusting electric field cathode may be 5-30 mm, 2.5-139.9 mm, 9.9-139.9 mm, 2.5-9.9 mm, 9.9-20 mm, 20-30 mm, 30-40 mm, 40-50 mm, 50-60 mm, 60-70 mm, 70-80 mm, 80-90 mm, 90-100 mm, 100-110 mm, 110-120 mm, 120-130 mm, 130-139.9 mm, 9.9 mm, 139.9 mm, or 2.5 mm. The distance between the dedusting electric field anode and the dedusting electric field cathode is also referred to as the inter-electrode distance. The inter-electrode distance refers to a minimal vertical distance between the working surface of the dedusting electric field anode and the working surface of the dedusting electric field cathode. Selection of the inter-electrode distance in this manner can effectively reduce electric field coupling and allow the electric field device to have resistance to high temperatures.

In an embodiment of the present invention, the dedusting electric field cathode has a diameter of 1-3 mm, and the inter-electrode distance between the dedusting electric field anode and the dedusting electric field cathode is 2.5-139.9 mm.The ratio of the dust accumulation area of the dedusting electric field anode to the discharge area of the dedusting electric field cathode is 1.667:1-1680:1.

In view of the special performance of ionization dedusting, ionization dedusting is suitable for removing particulates in gas. However, years of research by many universities, research institutes, and enterprises have shown that existing electric field dedusting devices only can remove about 70% of particulate.This removal rate fails to satisfy requirements in many industries. In addition, the prior art electric field dedusting devices are too bulky in volume.

The inventor of the present invention found that the defects of prior art electric field dedusting devices are caused by electric field coupling. In the present invention, by reducing the coupling time of the electric field, the dimensions (i.e., the volume) of the electric field dedusting device can be significantly reduced. For example, the dimensions of the ionization dedusting device of the present invention are about one-fifth of the dimensions of existing ionization dedusting devices. In order to obtain an acceptable particle removal rate, existing ionization dedusting devices are set to a gas flow velocity of about 1 m/s.However, in the present invention, when the gas flow velocity is increased to 6 m/s, a higher particle removal rate can still be obtained. When dealing with a gas having a given flow rate, increasing the gas speed enables the dimensions of the electric field dedusting device to be reduced.

The present invention can significantly improve the particle removal rate. For example, when the gas flow velocity is about 1 m/s, the prior art electric field dedusting device can remove about 70% of particulates in engine emission, while the present invention can remove about 99% of the particulates, even if the gas flow velocity is 6 m/s.

As a result of the inventor discovering the effect of electric field coupling and a method for reducing the times of electric field coupling, the present invention achieves the above-described unexpected results.

The ionization dedusting electric field between the dedusting electric field anode and the dedusting electric field cathode is also referred to as a first electric field. In an embodiment of the present invention, a second electric field that is not parallel to the first electric field is further formed between the dedusting electric field anode and the dedusting electric field cathode. In another embodiment of the present invention, the second electric field is not perpendicular to a flow channel of the ionization dedusting electric field. The second electric field is also referred to as an auxiliary electric field, which can be formed by one or two first auxiliary electrodes. When the second electric field is formed by one first auxiliary electrode, the first auxiliary electrode can be placed at an entrance or an exit of the ionization dedusting electric field, and the first auxiliary electric field may carry a negative potential or a positive potential. When the first auxiliary electrode is a cathode, it is provided at or close to the entrance of the ionization dedusting electric field.The first auxiliary electrode and the dedusting electric field anode have an included angle α, wherein 0 °<α≤125 °, or 45 125 °, or 60 °≤α≤100 °, or α=90 °. When the first auxiliary electrode is an anode, it is provided at or close to the exit of the ionization dedusting electric field.The first auxiliary electrode and the dedusting electric field cathode have an included angle α, wherein 0 °<α≤125 °, or 45 °≤α≤125 °, or 60 ° ≤ α≤ 100 °, or α=90 °. When the second electric field is formed by two first auxiliary electrodes, one of the first auxiliary electrodes may carry a negative potential, and the other one of the first auxiliary electrodes may carry a positive potential.One of the first auxiliary electrodes may be placed at the entrance of the ionization electric field, and the other one of the first auxiliary electrodes is placed at the exit of the ionization electric field. The first auxiliary electrode may be a part of the dedusting electric field cathode or the dedusting electric field anode.Namely, the first auxiliary electrode may be constituted by an extended section of the dedusting electric field cathode or the dedusting electric field anode, in which case the dedusting electric field cathode and the dedusting electric field anode have different lengths. The first auxiliary electrode may also be an independent electrode, i.e., the first auxiliary electrode need not be a part of the dedusting electric field cathode or the dedusting electric field anode, in which case the second electric field and the first electric field have different voltages and can be independently controlled according to working conditions.

The second electric field can apply, to a negatively charged oxygen ion flow between the dedusting electric field anode and the dedusting electric field cathode, a force toward the exit of the ionization electric field such that the negatively charged oxygen ion flow between the dedusting electric field anode and the dedusting electric field cathode has a speed of movement toward the exit. In a process in which a gas flow into the ionization electric field and flows towards the exit of the ionization electric field, the negatively charged oxygen ions also move towards the exit of the ionization electric field and the dedusting electric field anode, and the negatively charged oxygen ions will be combined with particulates and the like in the gas in the process of moving towards the exit of the ionization electric field and the dedusting electric field anode. As the oxygen ions have a speed of movement toward the exit, when the oxygen ions are combined with the particulates, no stronger collision will be created therebetween, thus avoiding higher energy consumption due to stronger collision, ensuring that the oxygen ions are more readily combined with the particulates, and leading to a higher charging efficiency of the particulates.Furthermore, under the action of the dedusting electric field anode, more particulates can be collected, ensuring a higher dedusting efficiency of the electric field device. For the electric field device, the collection rate of particulates entering the electric field along an ion flow direction is improved by nearly 100% compared with the collection rate of particulates entering the electric field in a direction countering the ion flow direction, thereby improving the dust accumulating efficiency of the electric field and reducing the power consumption by the electric field.A main reason for the relatively low dedusting efficiency of the prior art dust collecting electric fields is also that the direction of dust entering the electric field is opposite to or perpendicular to the direction of the ion flow in the electric field so that the dust and the ion flow collide violently with each other and generate relatively high energy consumption.At the same time, the charging efficiency is also affected, further reducing the dust collecting efficiency of the prior art electric fields and increasing the power consumption. When the electric field device collects dust in a gas, the gas and the dust enter the electric field along the ion flow direction, the dust is sufficiently charged, and the consumption of the electric field is low.As a result, the dust collecting efficiency of a unipolar electric field will reach 99.99%. When the gas and the dust enter the electric field in a direction countering the ion flow direction, the dust is insufficiently charged, the power consumption of the electric field will also be increased, and the dust collecting efficiency will be 40%-75%. In an embodiment of the present invention, the ion flow formed by the electric field device facilitates unpowered fan fluid transportation, increases the oxygen content in the gas, heat exchange and so on.

As the dedusting electric field anode continuously collects particulates and the like in the gas intake, the particulates and the like are accumulated on the dedusting electric field anode and form dust.The thickness of the dust is increased continuously such that the inter-electrode distance is reduced. In an embodiment of the present invention, when the dust is accumulated in the electric field, the electric field device detects an electric field current and performs dust cleaning in any one of the following manners:
(1) by increasing an electric field voltage when the electric field device detects that the electric field current has increased to a given value;
(2) by using an electric field back corona discharge phenomenon to complete the dust cleaning when the electric field device detects that the electric field current has increased to a given value;
(3) by using an electric field back corona discharge phenomenon, increasing an electric field voltage, and restricting an injection current to complete the dust cleaning when the electric field device detects that the electric field current has increased to a given value; or
(4) by using an electric field back corona discharge phenomenon, increasing an electric field voltage, and restricting an injection current when the electric field device detects that the electric field current has increased to a given value so that rapid discharge occurring at a deposition position of the anode generates plasmas, and so that the plasmas enable organic components of the dust to be deeply oxidized and break polymer bonds to form small molecular carbon dioxide and water, thereby completing the dust cleaning.

In an embodiment of the present invention, the dedusting electric field anode and the dedusting electric field cathode are each electrically connected to a different one of two electrodes of a power supply. A suitable voltage level should be selected for the voltage applied to the dedusting electric field anode and the dedusting electric field cathode.The specifically selected voltage level depends upon the volume, temperature resistance, dust holding rate, and the like of the electric field device. For example, the voltage ranges from 1 kv to 50 kv.In designing, the temperature resistance conditions, and parameters of the inter-electrode distance and temperature are considered first: 1 MM <30 degrees, the dust accumulation area is greater than 0.1 square/kilocubic meter/hour, the length of the electric field is greater than 5 times the diameter of an inscribed circle of a single tube, and the gas flow velocity in the electric field is controlled to be less than 9 m/s. In an embodiment of the present invention, the dedusting electric field anode is comprised of first hollow anode tubes and has a honeycomb shape. An end opening of each first hollow anode tube may be circular or polygonal. In an embodiment of the present invention, an inscribed circle inside the first hollow anode tube has a diameter in the range of 5-400 mm, the corresponding voltage is 0.1-120 kv, and the corresponding current of the first hollow anode tube is 0.1-30 A. Different inscribed circles correspond to different corona voltages of about 1 KV/1 MM

In an embodiment of the present invention, the electric field device includes a first electric field stage, the first electric field stage includes a plurality of first electric field generating units, and there may be one or more first electric field generating units. The first electric field generating unit is also referred to as a first dust collecting unit, which includes the above-describeddedusting electric field anode and the above-described dedusting electric field cathode.There may be one or more first dust collecting units. When there is a plurality of first electric field stages, the dust collecting efficiency of the electric field device can be effectively improved. In a same first electric field stage, each dedusting electric field anode has the same polarity, and each dedusting electric field cathode has the same polarity. When there is a plurality of the first electric field stages, the first electric field stages are connected in series. In an embodiment of the present invention, the electric field device further includes a plurality of connection housings, and the serially connected first electric field stages are connected by the connection housings.The distance between two adjacent electric field stages is greater than 1.4 times the inter-electrode distance.

In an embodiment of the present invention, the electric field is used to charge an electret material. When the electric field device fails, the charged electret material is used to remove dust.

In an embodiment of the present invention, the electric field device includes an electret element.

In an embodiment of the present invention, the electret element is provided inside the dedusting electric field anode.

In an embodiment of the present invention, when the dedusting electric field anode and the dedusting electric field cathode are powered on, the electret element is in the ionization dedusting electric field.

In an embodiment of the present invention, the electret element is close to the electric field device exit, or the electret element is provided at the electric field device exit.

In an embodiment of the present invention, the dedusting electric field anode and the dedusting electric field cathode form a flow channel, and the electret element is provided in the flow channel.

In an embodiment of the present invention, the flow channel includes a flow channel exit, and the electret element is close to the flow channel exit, or the electret element is provided at the flow channel exit.

In an embodiment of the present invention, the cross section of the electret element in the flow channel occupies 5%-100% of the cross section of the flow channel.

In an embodiment of the present invention, the cross section of the electret element in the flow channel occupies 10%-90%, 20%-80%, or 40%-60% of the cross section of the flow channel.

In an embodiment of the present invention, the ionization dedusting electric field charges the electret element.

In an embodiment of the present invention, the electret element has a porous structure.

In an embodiment of the present invention, the electret element is a textile.

In an embodiment of the present invention, the dedusting electric field anode has a tubular interior, the electret element has a tubular exterior, and the dedusting electric field anode is disposed around the electret element like a sleeve.

In an embodiment of the present invention, the electret element is detachably connected with the dedusting electric field anode.

In an embodiment of the present invention, materials forming the electret element include an inorganic compound having electret properties. Electret properties refer to the ability of the electret element to carry electric charges after being charged by an external power supply and still retain certain charges after being completely disconnected from the power supply so as to act as an electrode and function as an electric field electrode.

In an embodiment of the present invention, the inorganic compound is one or a combination of compounds selected from an oxygen-containing compound, a nitrogen-containing compound, and a glass fiber.

In an embodiment of the present invention, the oxygen-containing compound is one or a combination of compounds selected from a metal-based oxide, an oxygen-containing complex, and an oxygen-containing inorganic heteropoly acid salt.

In an embodiment of the present invention, the metal-based oxide is one or a combination of oxides selected from aluminum oxide, zinc oxide, zirconium oxide, titanium oxide, barium oxide, tantalum oxide, silicon oxide, lead oxide, and tin oxide.

In an embodiment of the present invention, the metal-based oxide is aluminum oxide.

In an embodiment of the present invention, the oxygen-containing complex is one or a combination of materials selected from titanium zirconium composite oxide and titanium barium composite oxide.

In an embodiment of the present invention, the oxygen-containing inorganic heteropoly acid salt is one or a combination of salts selected from zirconium titanate, lead zirconate titanate, and barium titanate.

In an embodiment of the present invention, the nitrogen-containing compound is silicon nitride.

In an embodiment of the present invention, materials forming the electret element include an organic compound having electret properties. Electret properties refer to the ability of the electret element to carry electric charges after being charged by an external power supply and still retain certain charges after being completely disconnected from the power supply so as to act as an electrode of an electric field electrode.

In an embodiment of the present invention, the organic compound is one or a combination of compounds selected from fluoropolymers, polycarbonates, PP, PE, PVC, natural wax, resin, and rosin.

In an embodiment of the present invention, the fluoropolymer is one or a combination of materials selected from polytetrafluoroethylene (PTFE), fluorinated ethylene propylene (Teflon-FEP), soluble polytetrafluoroethylene (PFA), and polyvinylidene fluoride (PVDF).

In an embodiment of the present invention, the fluoropolymer is polytetrafluoroethylene.

The ionization dedusting electric field is generated in a condition with a power-on drive voltage, and the ionization dedusting electric field is used to ionize a part of the substance to be treated, adsorb particulates in the the air, and at the same time charge the electret element. When the electric field device fails, that is, when there is no power-on drive voltage, the charged electret element generates an electric field, and the particulates in thethe air are adsorbed using the electric field generated by the charged electret element.Namely, the particulates can still be adsorbed when the ionization dedusting electric field is in trouble.

In an embodiment of the present invention, the air dedusting system further includes an ozone removing device configured to remove or reduce ozone generated by the electric field device, the ozone removing device being located between the electric field device exit and the air dedusting system exit.

In an embodiment of the present invention, the ozone removing device includes an ozone digester.

In an embodiment of the present invention, the ozone digester is at least one type of digester selected from an ultraviolet ozone digester and a catalytic ozone digester.

The air dedusting system in the present invention further includes the ozone removing device configured to remove or reduce ozone generated by the electric field device. As oxygen in the air participates in ionization, ozone is formed, and subsequent performance of the device is affected. If the ozone enters the engine, internal chemical components have an increased oxygen elements and an increased molecular weight, hydrocarbon compounds are converted into non-hydrocarbon compounds, and the color is darkened in appearance with increased precipitation and increased corrosivity, causing degradation of the functional performance of lubricating oils.Therefore, the air dedusting system further includes the ozone removing device, thereby avoiding or reducing degradation of subsequent performance of the device, such as avoiding or reducing degradation of the functional performance of lubricating oils in engines.

For the system, in an embodiment of the present invention, the present invention provides an electric field dedusting method including the following steps:

enabling a dust-containing gas to pass through an ionization dedusting electric field generated by a dedusting electric field anode and a dedusting electric field cathode; and

performing a dust cleaning treatment when dust is accumulated in the electric field.

In an embodiment of the present invention, the dust cleaning treatment is performed when a detected electric field current has increased to a given value.

In an embodiment of the present invention, when dust is accumulated in the electric field, the dust is cleaned in any one of the following manners:
(1) using an electric field back corona discharge phenomenon to complete the dust cleaning treatment;
(2) using an electric field back corona discharge phenomenon, increasing a voltage, and restricting an injection current to complete the dust cleaning treatment; and
(3) using an electric field back corona discharge phenomenon increasing a voltage, and restricting an injection current so that rapid discharge occurring at a deposition position of the anode generates plasmas, and the plasmas enable organic components of the dust to be deeply oxidized and break polymer bonds to form small molecular carbon dioxide and water, thereby completing the dust cleaning treatment.

Preferably, the dust is carbon black.

In an embodiment of the present invention, the dedusting electric field cathode includes a plurality of cathode filaments. Each cathode filament may have a diameter of 0.1 mm-20 mm.This dimensional parameter is adjusted according to application situations and dust accumulation requirements. In an embodiment of the present invention, each cathode filament has a diameter of no more than 3 mm. In an embodiment of the present invention, the cathode filaments are metal wires or alloy filaments, which can easily discharge electricity, are high temperature-resistant, are capable of supporting their own weight, and are electrochemically stable. In an embodiment of the present invention, titanium is selected as the material of the cathode filaments. The specific shape of the cathode filaments is adjusted according to the shape of the dedusting electric field anode.For example, if a dust accumulation surface of the dedusting electric field anode is a flat surface, the cross section of each cathode filament is circular.If a dust accumulation surface of the dedusting electric field anode is an arcuate surface, the cathode filament needs to be designed with a polygonal shape. The length of the cathode filaments is adjusted according to the dedusting electric field anode.

In an embodiment of the present invention, the dedusting electric field cathode includes a plurality of cathode bars. In an embodiment of the present invention, each cathode bar has a diameter of no more than 3 mm. In an embodiment of the present invention, the cathode bars are metal bars or alloy bars which can easily discharge electricity. Each cathode bar may have a needle shape, a polygonal shape, a burr shape, a threaded rod shape, or a columnar shape. The shape of the cathode bars can be adjusted according to the shape of the dedusting electric field anode.For example, if a dust accumulation surface of the dedusting electric field anode is a flat surface, the cross section of each cathode bar needs to be designed to have a circular shape.If a dust accumulation surface of the dedusting electric field anode is an arcuate surface, each cathode bar needs to be designed to have a polyhedral shape.

In an embodiment of the present invention, the dedusting electric field cathode is provided in the dedusting electric field anode in a penetrating manner.

In an embodiment of the present invention, the dedusting electric field anode includes one or more hollow anode tubes provided in parallel. When there is a plurality of hollow anode tubes, all of the hollow anode tubes constitute a honeycomb-shaped dedusting electric field anode. In an embodiment of the present invention, the cross section of each hollow anode tube may be circular or polygonal. If the cross section of each hollow anode tube is circular, a uniform electric field can be formed between the dedusting electric field anode and the dedusting electric field cathode, and dust is not easily accumulated on the inner walls of the hollow anode tubes. If the cross section of each hollow anode tube is triangular, 3 dust accumulation surfaces and 3 dust holding corners can be formed on the inner wall of each hollow anode tube.A hollow anode tube having such a structure has the highest dust holding rate. If the cross section of each hollow anode tube is quadrilateral, 4 dust accumulation surfaces and 4 dust holding corners can be formed, but the assembled structure is unstable. If the cross section of each hollow anode tube is hexagonal, 6 dust accumulation surfaces and 6 dust holding corners can be formed, and the dust accumulation surfaces and the dust holding rate reach a balance. If the cross section of each hollow anode tube is polygonal, more dust accumulation edges can be obtained, but the dust holding rate is sacrificed. In an embodiment of the present invention, an inscribed circle inside each hollow anode tube has a diameter in the range of 5 mm-400 mm.

In an embodiment of the present invention, the present invention provides a method for accelerating the air, including the following steps:
enabling the airto pass through a flow channel; and
producing an electric field in the flow channel, wherein the electric field is not perpendicular to the flow channel, and the electric field includes an entrance and an exit.

In the above method, the electric field ionizes the air.

In an embodiment of the present invention, the electric field includes a first anode and a first cathode, the first anode and the first cathode form the flow channel, and the flow channel connects the entrance and the exit. The first anode and the first cathode ionize airin the flow channel.

In an embodiment of the present invention, the electric field includes a second electrode provided at or close to the entrance.

In the above method, the second electrode is a cathode and serves as an extension of the first cathode. Preferably, the second electrode and the first anode have an included angle α, wherein 0 °<α≤125 °, or 45 °≤α≤125 °, or 60 °≤α≤100 °, or α=90 °.

In an embodiment of the present invention, the second electrode is provided independently of the first anode and the first cathode.

In an embodiment of the present invention, the electric field includes a third electrode which is provided at or close to the exit.

In the above method, the third electrode is an anode, and the third electrode is an extension of the first anode. Preferably, the third electrode and the first cathode have an included angle α, wherein 0 °<α≤125°, or 45 °≤α≤125 °, or 60 °≤α≤100°, or α=90 °.

In an embodiment of the present invention, the third electrode is provided independently of the first anode and the first cathode.

In an embodiment of the present invention, the first cathode includes a plurality of cathode filaments. Each cathode filament may have a diameter of 0.1 mm-20 mm.This dimensional parameter is adjusted according to application situations and dust accumulation requirements. In an embodiment of the present invention, each cathode filament has a diameter of no more than 3 mm. In an embodiment of the present invention, the cathode filaments are metal wires or alloy filaments, which can easily discharge electricity, high temperature-resistant, are capable of supporting their own weight, and are electrochemically stable. In an embodiment of the present invention, titanium is selected as the material of the cathode filaments. The specific shape of the cathode filaments is adjusted according to the shape of the first anode.For example, if a dust accumulation surface of the first anode is a flat surface, the cross section of each cathode filament is circular.If a dust accumulation surface of the first anode is an arcuate surface, the cathode filament needs to be designed to have a polyhedral shape. The length of the cathode filaments is adjusted according to the first anode.

In an embodiment of the present invention, the first cathode includes a plurality of cathode bars. In an embodiment of the present invention, each cathode bar has a diameter of no more than 3 mm. In an embodiment of the present invention, the cathode bars are metal bars or alloy bars which can easily discharge electricity. Each cathode bar may have a needle shape, a polygonal shape, a burr shape, a threaded rod shape, or a columnar shape. The shape of the cathode bars can be adjusted according to the shape of the first anode.For example, if a dust accumulation surface of the first anode is a flat surface, the cross section of each cathode bar needs to be designed with a circular shape.If a dust accumulation surface of the first anode is an arcuate surface, each cathode bar needs to be designed with a polyhedral shape.

In an embodiment of the present invention, the first cathode is provided in the first anode in a penetrating manner.

In an embodiment of the present invention, the first anode includes one or more hollow anode tubes provided in parallel. When there is a plurality of hollow anode tubes, all of the hollow anode tubes constitute a honeycomb-shaped first anode. In an embodiment of the present invention, the cross section of each hollow anode tube may be circular or polygonal. If the cross section of each hollow anode tube is circular, a uniform electric field can be formed between the first anode and the first cathode, and dust is not easily accumulated on the inner walls of the hollow anode tubes. If the cross section of each hollow anode tube is triangular, 3 dust accumulation surfaces and 3 dust holding corners can be formed on the inner wall of each hollow anode tube.A hollow anode tube having such a structure has the highest dust holding rate. If the cross section of each hollow anode tube is quadrilateral, 4 dust accumulation surfaces and 4 dust holding corners can be formed, but the assembled structure is unstable. If the cross section of each hollow anode tube is hexagonal, 6 dust accumulation surfaces and 6 dust holding corners can be formed, and the dust accumulation surfaces and the dust holding rate reach a balance. If the cross section of each hollow anode tube is polygonal, more dust accumulation edges can be obtained, but the dust holding rate is sacrificed. In an embodiment of the present invention, an inscribed circle inside each hollow anode tube has a diameter in the range of 5 mm-400 mm.

Inan embodiment, the present invention provides a method for reducing coupling of an air dedusting electric field, including the following steps:
enabling anair to pass through an ionization dedusting electric field generated by a dedusting electric field anode and a dedusting electric field cathode; and
selecting the dedusting electric field anode or/and the dedusting electric field cathode.

In an embodiment of the present invention, the size selected for the dedusting electric field anode or/and the dedusting electric field cathode allows the coupling time of the electric field to be ≤3.

Specifically, the ratio of the dust collection area of the dedusting electric field anode to the discharge area of the dedusting electric field cathode is selected. Preferably, the ratio of the dust accumulation area of the dedusting electric field anode to the discharge area of the dedusting electric field cathode is selected to be 1.667:1-1680:1.

More preferably, the ratio of the dust accumulation area of the dedusting electric field anode to the discharge area of the dedusting electric field cathode is selected to be 6.67: 1-56.67: 1.

In an embodiment of the present invention, the dedusting electric field cathode has a diameter of 1-3 mm, and the inter-electrode distance between the dedusting electric field anode and the dedusting electric field cathode is 2.5-139.9 mm.The ratio of the dust accumulation area of the dedusting electric field anode to the discharge area of the dedusting electric field cathode is 1.667:1-1680:1.

Preferably, the inter-electrode distance between the dedusting electric field anode and the dedusting electric field cathode is selected to be less than 150 mm.

Preferably, the inter-electrode distance between the dedusting electric field anode and the dedusting electric field cathode is selected to be 2.5-139.9 mm. More preferably, the inter-electrode distance between the dedusting electric field anode and the dedusting electric field cathode is selected to be 5-100 mm.

Preferably, the dedusting electric field anode is selected to have a length of 10-180 mm. More preferably, the dedusting electric field anode is selected to have a length of 60-180 mm.

Preferably, the dedusting electric field cathode is selected to have a length of 30-180 mm. More preferably, the dedusting electric field cathode is selected to have a length of 54-176 mm.

In an embodiment of the present invention, the dedusting electric field cathode includes a plurality of cathode filaments. Each cathode filament may have a diameter of 0.1 mm-20 mm.This dimensional parameter is adjusted according to application situations and dust accumulation requirements. In an embodiment of the present invention, each cathode filament has a diameter of no more than 3 mm. In an embodiment of the present invention, the cathode filaments are metal wires or alloy filaments, which can easily discharge electricity, high temperature-resistant are capable of supporting their own weight, and are electrochemically stable. In an embodiment of the present invention, titanium is selected as the material of the cathode filaments. The specific shape of the cathode filaments is adjusted according to the shape of the dedusting electric field anode.For example, if a dust accumulation surface of the dedusting electric field anode is a flat surface, the cross section of each cathode filament is circular.If a dust accumulation surface of the dedusting electric field anode is an arcuate surface, the cathode filament needs to be designed to have a polyhedral shape. The length of the cathode filaments is adjusted according to the dedusting electric field anode.

In an embodiment of the present invention, the dedusting electric field cathode includes a plurality of cathode bars. In an embodiment of the present invention, each cathode bar has a diameter of no more than 3 mm. In an embodiment of the present invention, the cathode bars are metal bars or alloy bars which can easily discharge electricity. Each cathode bar may have a needle shape, a polygonal shape, a burr shape, a threaded rod shape, or a columnar shape. The shape of the cathode bars can be adjusted according to the shape of the dedusting electric field anode.For example, if a dust accumulation surface of the dedusting electric field anode is a flat surface, the cross section of each cathode bar needs to be designed with a circular shape.If a dust accumulation surface of the dedusting electric field anode is an arcuate surface, each cathode bar needs to be designed to have a polyhedral shape.

In an embodiment of the present invention, the dedusting electric field cathode is provided in the dedusting electric field anode in a penetrating manner.

In an embodiment of the present invention, the dedusting electric field anode includes one or more hollow anode tubes provided in parallel. When there is a plurality of hollow anode tubes, all of the hollow anode tubes constitute a honeycomb-shaped dedusting electric field anode. In an embodiment of the present invention, the cross section of each hollow anode tube may be circular or polygonal. If the cross section of each hollow anode tube is circular, a uniform electric field can be formed between the dedusting electric field anode and the dedusting electric field cathode, and dust is not easily accumulated on the inner walls of the hollow anode tubes. If the cross section of each hollow anode tube is triangular, 3 dust accumulation surfaces and 3 dust holding corners can be formed on the inner wall of each hollow anode tube.A hollow anode tube having such a structure has the highest dust holding rate. If the cross section of each hollow anode tube is quadrilateral, 4 dust accumulation surfaces and 4 dust holding corners can be formed, but the assembled structure is unstable. If the cross section of each hollow anode tube is hexagonal, 6 dust accumulation surfaces and 6 dust holding corners can be formed, and the dust accumulation surfaces and the dust holding rate reach a balance. If the cross section of each hollow anode tube is polygonal, more dust accumulation edges can be obtained, but the dust holding rate is sacrificed. In an embodiment of the present invention, an inscribed circle inside each hollow anode tube has a diameter in the range of 5 mm-400 mm.

An air dedusting method includes the following steps:
1) adsorbing particulates in the air with an ionization dedusting electric field; and
2) charging an electret element with the ionization dedusting electric field.

In an embodiment of the present invention, the electret element is close to an electric field device exit, or the electret element is provided at the electric field device exit.

In an embodiment of the present invention, the dedusting electric field anode and the dedusting electric field cathode form a flow channel, and the electret element is provided in the flow channel.

In an embodiment of the present invention, the flow channel includes a flow channel exit, and the electret element is close to the flow channel exit, or the electret element is provided at the flow channel exit.

In an embodiment of the present invention, when the ionization dedusting electric field has no power-on drive voltage, the charged electret element is used to adsorb particulates in the air.

In an embodiment of the present invention, after adsorbing certain particulates in the air, the charged electret element is replaced by a new electret element.

In an embodiment of the present invention, after replacement with a new electret element, the ionization dedusting electric field is restarted to adsorb particulates in the air and charge the new electret element.

In an embodiment of the present invention, materials forming the electret element include an inorganic compound having electret properties. Electret properties refer to the ability of the electret element to carry electric charges after being charged by an external power supply and still retain certain charges after being completely disconnected from the power supply so as to act as an electrode and play the role of an electric field electrode.

In an embodiment of the present invention, the inorganic compound is one or a combination of compounds selected from an oxygen-containing compound, a nitrogen-containing compound, and a glass fiber.

In an embodiment of the present invention, the oxygen-containing compound is one or a combination of compounds selected from a metal-based oxide, an oxygen-containing complex, and an oxygen-containing inorganic heteropoly acid salt.

In an embodiment of the present invention, the metal-based oxide is one or a combination of oxides selected from aluminum oxide, zinc oxide, zirconium oxide, titanium oxide, barium oxide, tantalum oxide, silicon oxide, lead oxide, and tin oxide.

In an embodiment of the present invention, the metal-based oxide is aluminum oxide.

In an embodiment of the present invention, the oxygen-containing complex is one or a combination of materials selected from titanium zirconium composite oxide and titanium barium composite oxide.

In an embodiment of the present invention, the oxygen-containing inorganic heteropoly acid salt is one or a combination of salts selected from zirconium titanate, lead zirconate titanate, and barium titanate.

In an embodiment of the present invention, the nitrogen-containing compound is silicon nitride.

In an embodiment of the present invention, materials forming the electret element include an organic compound having electret properties. Electret properties refer to the ability of the electret element to carry electric charges after being charged by an external power supply, and still retain certain charges after being completely disconnected from the power supply so as to act as an electrode and play the role of an electric field electrode.

In an embodiment of the present invention, the organic compound is one or a combination of compounds selected from fluoropolymers, polycarbonates, PP, PE, PVC, natural wax, resin, and rosin.

In an embodiment of the present invention, the fluoropolymer is one or a combination of materials selected from polytetrafluoroethylene (PTFE), fluorinated ethylene propylene (Teflon-FEP), soluble polytetrafluoroethylene (PFA), and polyvinylidene fluoride (PVDF).

In an embodiment of the present invention, the fluoropolymer is polytetrafluoroethylene.

An air dedusting method includes a step of removing or reducing ozone generated by the ionization dedusting after the the air has undergone ionization dedusting.

In an embodiment of the present invention, ozone digestion is performed on the ozone generated by the ionization dedusting.

In an embodiment of the present invention, the ozone digestion is at least one type of digestion selected from ultraviolet digestion and catalytic digestion.

The air dedusting system and method of the invention are further described by specific embodiments below.

### Embodiment 1

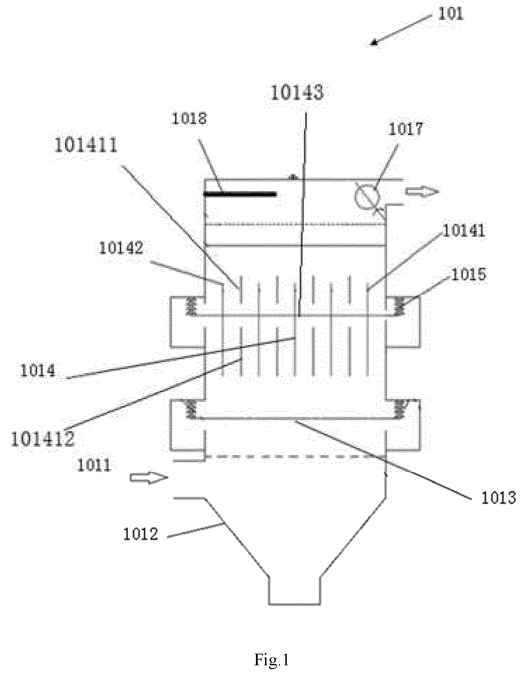

FIG. 1 shows a structural schematic diagram of an embodiment of an air dedusting system. The airdedusting system 101 includes a dedusting system entrance 1011, a centrifugal separation mechanism 1012, a first water filtering mechanism 1013, an electric field device 1014, an insulation mechanism 1015, an equalizing device, a second water filtering mechanism 1017 and/or an ozone mechanism 1018. In the present invention, the first water filtering mechanism 1013 and/or the second water filtering mechanism 1017 is optional. Namely, the air dedusting system provided in the present invention may include the first water filtering mechanism 1013 and/or the second water filtering mechanism 1017, or it may omit the first water filtering mechanism 1013 and/or the second water filtering mechanism 1017.

As shown in FIG. 1, the dedusting system entrance 1011 is provided on an intake wall of the centrifugal separation mechanism 1012 so as to receive a gas with particulates.

The centrifugal separation mechanism 1012 provided at a lower end of the air dedusting system 101 is a conical barrel. An exhaust port is at a joint between the conical barrel and the electric field device 1014, and the exhaust port is provided thereon with a first filtering layer for filtering the particulates. A bottom of the conical barrel is provided with a powder exit for receiving the particulates.

Specifically, when the gas containing particulates enters the centrifugal separation mechanism 1012 from the electric field deviceentrance 1011 generally at a speed of 12-30 m/s, the gas will change from linear motion to circumferential motion. Most of a swirling airflow flows spirally downwards towards the conical body from the barrel cylindrical body along a wall.In addition, under the action of centrifugal force, the particulates are thrown to an inner wall of the separation mechanism, and once contacting the inner wall, the particulates will fall down along a wall surface relying on the momentum of a downward axial velocity near the inner wall and are discharged through the powder exit. The external vortex rotating downwards continuously flows into a central portion of the separation mechanism during the falling-down process, forming a centripetal radial airflow.This part of airflow constitutes an inner vortex rotating upwards. Inner and outer vortices have the same rotational direction. Finally, the purified gas is discharged into the electric field device 1014 via the exhaust port and a first filtering screen (not shown in the figures), and a portion of unseparated finer dust particles is unable to escape.

The first water filtering mechanism 1013 provided inside the centrifugal separation mechanism 1012 includes a first electrode, which is an electrically conductive screen plate, provided in the electric field deviceentrance 1011.The electrically conductive screen plate is used to conduct electrons to liquid water (a low specific resistance substance) after being powered on. In the present embodiment, a second electrode for adsorbing charged liquid water is an anode dust accumulating portion, i.e., a dedusting electric field anode 10141 of the electric field device 1014.

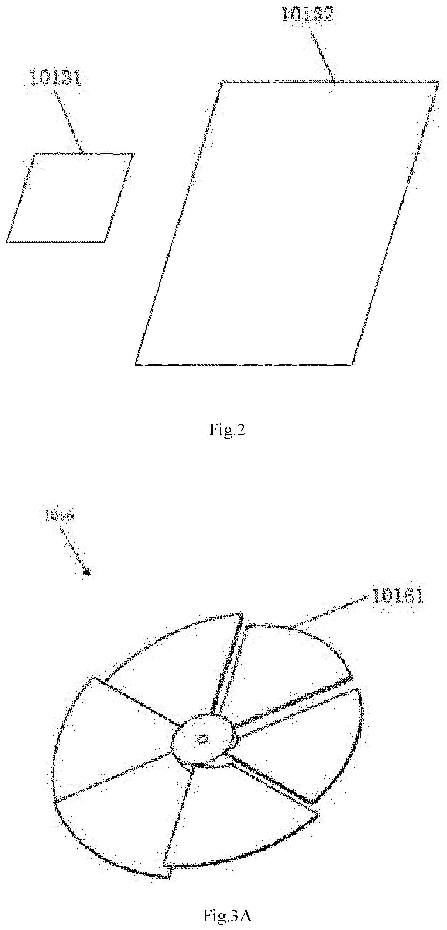

FIG. 2 shows a structural diagram of another embodiment of the first water filtering mechanism provided in the air dedustingdevice. A first electrode 10131 of the first water filtering mechanism is provided at a gas inlet.The first electrode 10131 is an electrically conductive screen plate with a negative potential. In the present embodiment, a second electrode 10132 having a planar net shape is provided in the intake device. The second electrode 10132 carries a positive potential and is also referred to as a collector. In the present embodiment, the second electrode 10132 specifically has a planar net shape, and the first electrode 10131 is parallel to the second electrode 10132. In the present embodiment, a net-plane electric field is formed between the first electrode 10131 and the second electrode 10132. The first electrode 10131 has a net-shaped structure made of metal wires, and the first electrode 10131 is made of a wire mesh. In the present embodiment, the area of the second electrode 10132 is greater than the area of the first electrode 10131. The electric field device 1014 includes a dedusting electric field anode 10141 and a dedusting electric field cathode 10142 provided inside the dedusting electric field anode 10141. An asymmetric electrostatic field is formed between the dedusting electric field anode 10141 and the dedusting electric field cathode 10142, wherein after the gas containing particulates enters the electric field device 1014 through the exhaust port, as the dedusting electric field cathode 10142 discharges and ionizes the gas, the particulates obtain a negative charge and move towards the dedusting electric field anode 10141 and are deposited on the dedusting electric field anode 10141.

Specifically, the dedusting electric field anode 10141 is internally composed of a hollow, honeycomb-shaped anode tube bundle group, wherein an end opening of each anode tube bundle has a hexagonal shape.

The dedusting electric field cathode 10142 includes a plurality of electrode bars which penetrate through each anode tube bundle of the anode tube bundle group in one-to-one correspondence. Each electrode bar has a needle shape, a polygonal shape, a burr shape, a threaded rod shape, or a columnar shape.

In the present embodiment, an outlet end of the dedusting electric field cathode 10142 is lower than an outlet end of the dedusting electric field anode 10141, and the outlet end of the dedusting electric field cathode 10142 is flush with an inlet end of the dedusting electric field anode 10141 such that an acceleration electric field is formed inside the electric field device 1014.

The insulation mechanism 1015 includes an insulation portion and a heat-protection portion. The insulation portion is made of a ceramic material or a glass material. The insulation portion is an umbrella-shaped string ceramic column or glass column, or a column-shaped string ceramic column or glass column, with the interior and exterior of the umbrella or the interior and exterior of the column being glazed.

As shown in FIG. 1, in an embodiment of the present invention, the dedusting electric field cathode 10142 is mounted on a cathode supporting plate 10143, and the cathode supporting plate 10143 is connected to the dedusting electric field anode 10141 through the insulation mechanism 1015. The insulation mechanism 1015 is configured to realize insulation between the cathode supporting plate 10143 and the dedusting electric field anode 10141. In an embodiment of the present invention, the dedusting electric field anode 10141 includes a first anode portion 101412 and a second anode portion 101411.Namely, the first anode portion 101412 is close to an electric field device entrance, and the second anode portion 101411 is close to an electric field device exit. The cathode supporting plate and the insulation mechanism are between the first anode portion 101412 and the second anode portion 101411. Namely, the insulation mechanism 1015, which is mounted in the middle of the ionization electric field or in the middle of the dedusting electric field cathode 10142, can play a good role in supporting the dedusting electric field cathode 10142 and can function to secure the dedusting electric field cathode 10142 relative to the dedusting electric field anode 10141 such that a set distance is maintained between the dedusting electric field cathode 10142 and the dedusting electric field anode 10141.

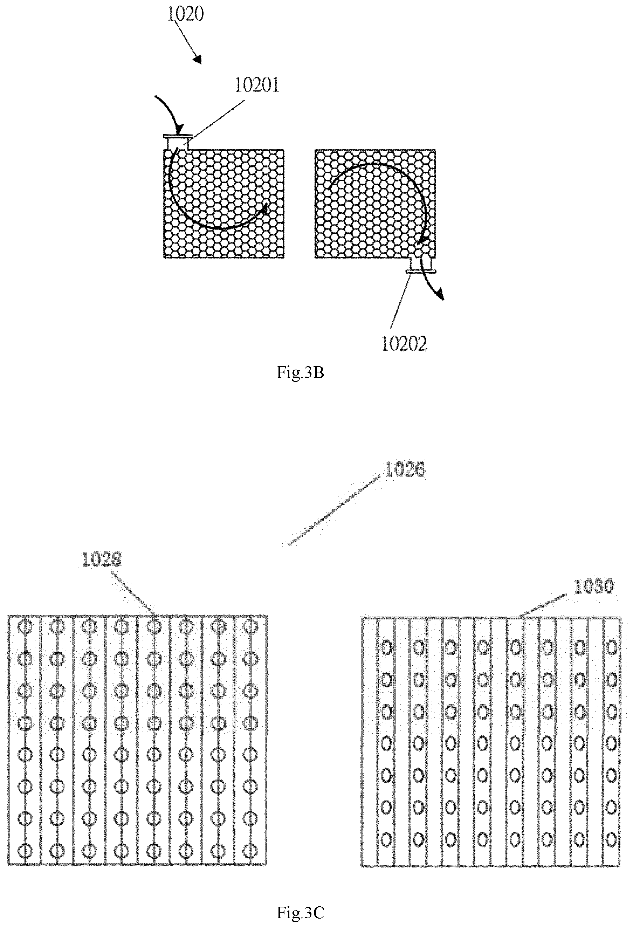

FIG. 3A, FIG. 3B and FIG. 3C show three implementation structural diagrams of the equalizing device.

As shown in FIG. 3A, the equalizing device 1016 when the dedusting electric field anode has a cylindrical outer shape, the equalizing device 1016 is located between the dedusting system entrance 1011 and the ionization dedusting electric field formed by the dedusting electric field anode 10141 and the dedusting electric field cathode 10142.It is composed of a plurality of equalizing blades 10161 rotating around a center of the dedusting system entrance 1011. The equalizing device can enable varied amounts of gasof the engine at various rotational speeds to uniformly pass through the electric field generated by the dedusting electric field anode and can keep a constant temperature and sufficient oxygen inside the dedusting electric field anode.

As shown in FIG. 3B, when the dedusting electric field anode has a cubic outer shape, the equalizing device 1020 includes the following:
an inlet pipe 10201 provided at one side of the dedusting electric field anode; and
an outlet pipe 10202 provided at the other side of the dedusting electric field anode, wherein the one side on which the inlet pipe 10201 is mounted is opposite to the other side on which the outlet pipe 10202 is mounted.

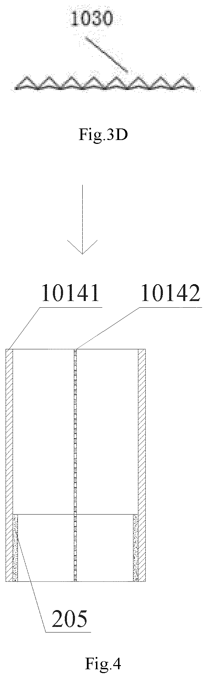

As shown in FIG. 3C, the equalizing device 1026 may further include a first venturi plate equalizing mechanism 1028 provided at an inlet end of the dedusting electric field anode and a second venturi plate equalizing mechanism 1030 provided at an outlet end of the dedusting electric field anode. (The second venturi plate equalizing mechanism 1030 has a folded shape as can be seen from the top view of the second venturi plate equalizing mechanism shown in FIG. 3D). The first venturi plate equalizing mechanism is provided with inlet holes, the second venturi plate equalizing mechanism is provided with outlet holes, and the inlet holes and the outlet holes are arranged in a staggered manner. A front surface is used for gas , and a side surface is used for gas discharge, thereby forming a cyclone structure.

In the present embodiment, a second filtering screen is provided at a joint between the electric field device 1014 and the second water filtering mechanism 1017 and is configured to filter fine particles with a smaller particle size that are not treated by the electric field device 1014.

The second water filtering mechanism 1017 which is provided at the outlet end includes a third filtering screen, a rotating shaft, and a water blocking ball.

The third filtering screen is obliquely arranged at the outlet end through the rotating shaft, and the water blocking ball is mounted at a position of the third filtering screen corresponding to a gas outlet. The entering gas pushes the third filtering screen to rotate around the rotating shaft, a water film is formed on the third filtering screen, and the water blocking ball blocks the outlet end so as to prevent water from rushing out.

An ozone removing lamp tube is adopted as the ozone mechanism 1018 provided at the outlet end of the dedusting electric field system.

### Embodiment 2

An electric field device shown in FIG. 4 includes a dedusting electric field anode 10141, a dedusting electric field cathode 10142, and an electret element 205. An ionization dedusting electric field is formed when the dedusting electric field anode 10141 and the dedusting electric field cathode 10142 are connected to a power supply. The electretelement 205 is provided in the ionization dedusting electric field. The arrow in FIG. 4 shows the flow direction of a substance to be treated. The electret element 205 is provided at an electric field device exit. The ionization dedusting electric field charges the electret element. The electret element has a porous structure, and the material of the electret element is alumina. The dedusting electric field anode has a tubular interior, the electret element has a tubular exterior, and the dedusting electric field element is disposed around the electret element like a sleeve.The electret element is detachably connected with the dedusting electric field anode.

An air dedusting method includes the following steps:
a) adsorbing particulates in the air with an ionization dedusting electric field; and
b) charging an electret element with the ionization dedusting electric field.

In this method, the electret element is provided at the electric field device exit, and the material of the electret element is alumina. When the ionization dedusting electric field has no power-on drive voltage, the charged electret element is used to adsorb particulates in the air . After adsorbing certain particulates in the air, the charged electret element is replaced by a new electret element. After replacement with the new electret element, the ionization dedusting electric field is restarted to adsorb particulates in the air and charge the new electret element.

### Embodiment 3

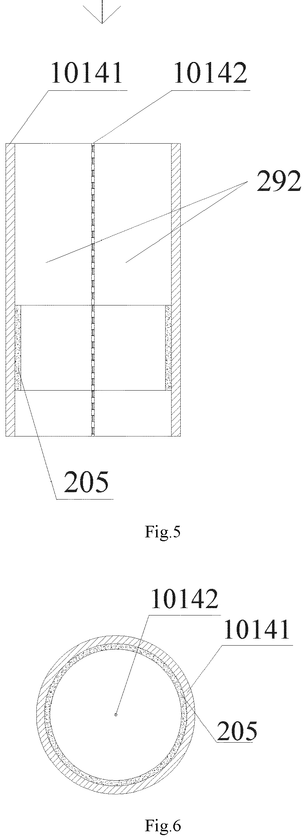

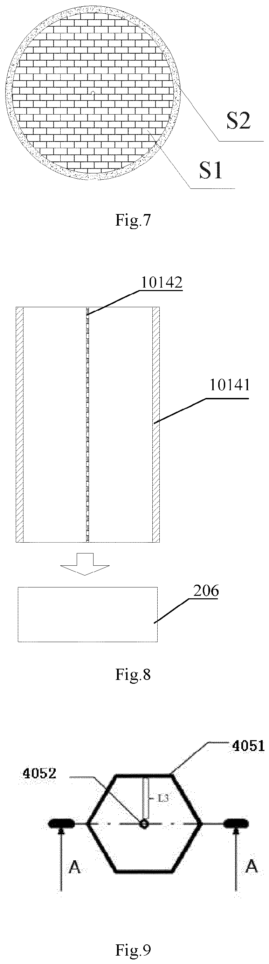

An electric field device shown in FIG. 5 and FIG. 6 includes a dedusting electric field anode 10141, a dedusting electric field cathode 10142, and an electret element 205. The dedusting electric field anode 10141 and the dedusting electric field cathode 10142 form a flow channel 292, and the electret element 205 is provided in the flow channel 292. The arrow in FIG. 5 shows the flow direction of a substance to be treated. The flow channel 292 includes a flow channel exit, and the electret element 205 is close to a flow channel exit. The cross section of the electret element 205 in the flow channel occupies 10% of the cross section of the flow channel, as shown in FIG. 7, which is S2/(S1+S2)□100%, where a first cross sectional area S2 is the cross sectional area of the electret element in the flow channel, the sum of the first cross sectional area S1 and the second cross sectional area S2 is the cross sectional area of the flow channel, and the first cross sectional area S1 does not include the cross sectional area of the dedusting electric field cathode 10142. An ionization dedusting electric field is formed when the dedusting electric field anode and the dedusting electric field cathode are connected to a power supply. The ionization dedusting electric field charges the electret element. The electret element has a porous structure, and the material of the electret element is polytetrafluoroethylene. The dedusting electric field anode has a tubular interior, the electret element has a tubular exterior, and the dedusting electric field anode is disposed around the electret element like a sleeve. The electret element is detachably connected with the dedusting electric field anode.

In an embodiment of the present invention, an air dedusting method includes the following steps:
a) adsorbing particulates in the air using an ionization dedusting electric field; and
b) charging an electret element using the ionization dedusting electric field.

In this method described above, the electret element is close to the flow channel exit, and the material forming the electret element is polytetrafluoroethylene. When the ionization dedusting electric field has no power-on drive voltage, the charged electret element is used to adsorb particulates in the air.After adsorbing certain particulates in the gas , the charged electret element is replaced by a new electret element. After the electret element is replaced by the new electret element, the ionization dedusting electric field is restarted to adsorb particulates in the gas and charge the new electret element.

### Embodiment 4

As shown in FIG. 8, an air dedusting system includes an electric field device and an ozone removing device 206.The electric field device includes a dedusting electric field anode 10141 and a dedusting electric field cathode 10142.The ozone removing device is used to remove or reduce ozone generated by the electric field device. The ozone removing device 206 is disposed between an electric field device exit and a dedusting system exit. The dedusting electric field anode 10141 and the dedusting electric field cathode 10142 are configured to generate an ionization dedusting electric field. The ozone removing device 206 includes an ozone digester configured to digest the ozone generated by the electric field device.The ozone digester is an ultraviolet ozone digester. The arrow in the figure shows the flow direction of gas .

An air dedusting method includes the following steps: performing ionization dedusting on the air, and then performing ozone digestion on ozone generated by the ionization dedusting, wherein the ozone digestion is ultraviolet digestion.

The ozone removing device is used to remove or reduce ozone generated by the electric field device. As oxygen in the air participates in ionization, ozone is formed.

### Embodiment 5

As shown in FIG. 9, in the present embodiment, an electric field generating unit, which is applicable to electric field device includes a dedusting electric field anode 4051 and a dedusting electric field cathode 4052 for generating an electric field. The dedusting electric field anode 4051 and the dedusting electric field cathode 4052 are each electrically connected to a different one of two electrodes of a power supply.The power supply is a direct-current power supply.The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052.This discharge electric field is a static electric field.

As shown in FIG. 9, FIG. 10, and FIG. 11, in the present embodiment, the dedusting electric field anode 4051 is in the shape of a hollow regular hexagonal tube, the dedusting electric field cathode 4052 is in the shape of a rod.The dedusting electric field cathode 4052 is provided in the dedusting electric field anode 4051 in a penetrating manner.

A method for reducing electric field coupling includes the following steps: selecting the ratio of the dust collection area of the dedusting electric field anode 4051 to the discharge area of the dedusting electric field cathode 4052 to be 6.67:1, selecting the inter-electrode distance between the dedusting electric field anode 4051 and the dedusting electric field cathode 4052 to be 9.9 mm, selecting the length of the dedusting electric field anode 4051 to be 60 mm, and selecting the length of the dedusting electric field cathode 4052 to be 54 mm.The dedusting electric field anode 4051 includes a fluid passage having an entrance end and an exit end.The dedusting electric field cathode 4052 is disposed in the fluid passage and extends in the direction of the fluid passage.An entrance end of the dedusting electric field anode 4051 is flush with a near entrance end of the dedusting electric field cathode 4052.There is an included angle α between an exit end of the dedusting electric field anode 4051 and a near exit end of the dedusting electric field cathode 4052, wherein α=118°.Under the action of the dedusting electric field anode 4051 and the dedusting electric field cathode 4052, more substances to be treated can be collected, the coupling time of the electric field of ≤3 is realized, and coupling consumption of the electric field to aerosols, water mist, oil mist, and loose smooth particulates can be reduced, thereby saving the electric energy of the electric field by 30-50%.

In the present embodiment, the electric field device includes an electric field stage composed of a plurality of the above-described electric field generating units, and there is a plurality of electric field stages so as to effectively improve the dust collecting efficiency of the present electric field device utilizing the plurality of dust collecting units. In the same electric field stage, the dedusting electric field anodes have the same polarity as each other, and the dedusting electric field cathodes have the same polarity as each other.

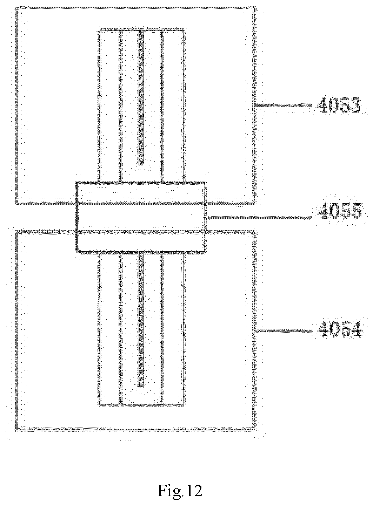

The plurality of electric field stages are connected in series to each other by a connection housing, and the distance between two adjacent electric field stages is greater than 1.4 times the inter-electrode distance. As shown in FIG. 12, there are two electric field stages, i.e., a first-stage electric field and a second-stage electric field which are connected in series by the connection housing.

In the present embodiment, the substance to be treated can be granular dust and can also be other impurities that need to be treated, such as aerosols, water mist, and oil mist.

In the present embodiment, the gas can be a gas which is to enter an engine or a gas which has been discharged from an engine.

### Embodiment 6

As shown in FIG. 9, in the present embodiment, an electric field generating unit, which is applicable to electric field device, includes a dedusting electric field anode 4051 and a dedusting electric field cathode 4052 for generating an electric field. The dedusting electric field anode 4051 and the dedusting electric field cathode 4052 are each electrically connected to a different one of two electrodes of a power supply.The power supply is a direct-current power supply.The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052.This discharge electric field is a static electric field.

In the present embodiment, the dedusting electric field anode 4051 is in the shape of a hollow regular hexagonal tube, the dedusting electric field cathode 4052 is in the shape of a rod, and the dedusting electric field cathode 4052 is provided in the dedusting electric field anode 4051 in a penetrating manner.

A method for reducing electric field coupling includes the following steps: selecting the ratio of the dust collection area of the dedusting electric field anode 4051 to the discharge area of the dedusting electric field cathode 4052 to be 1680:1, selecting the inter-electrode distance between the dedusting electric field anode 4051 and the dedusting electric field cathode 4052 to be 139.9 mm, selecting the length of the dedusting electric field anode 4051 to be 180 mm, and selecting the length of the dedusting electric field cathode 4052 to be 180 mm.The dedusting electric field anode 4051 includes a fluid passage having an entrance end and an exit end.The dedusting electric field cathode 4052 is disposed in the fluid passage and extends in the direction of the fluid passage.An entrance end of the dedusting electric field anode 4051 is flush with a near entrance end of the dedusting electric field cathode 4052, the exit end of the dedusting electric field anode 4051 is flush with a near exit end of the dedusting electric field cathode 4052.Under the action of the dedusting electric field anode 4051 and the dedusting electric field cathode 4052, more substances to be treated can be collected, the coupling time of the electric field, ≤3, is realized, and coupling consumption of the electric field to aerosols, water mist, oil mist and loose smooth particulates can be reduced, saving the electric energy of the electric field by 20-40%.

In the present embodiment, the substance to be treated can be granular dust and can also be other impurities that need to be treated, such as aerosols, water mist, and oil mist.

### Embodiment 7

As shown in FIG. 9, in the present embodiment, an electric field generating unit, which is applicable to electric field device, includes a dedusting electric field anode 4051 and a dedusting electric field cathode 4052 for generating an electric field. The dedusting electric field anode 4051 and the dedusting electric field cathode 4052 are each electrically connected to a different one of two electrodes of a power supply.The power supply is a direct-current power supply.The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052.This discharge electric field is a static electric field.

In the present embodiment, the dedusting electric field anode 4051 is in the shape of a hollow regular hexagonal tube, the dedusting electric field cathode 4052 is in the shape of a rod, and the dedusting electric field cathode 4052 is provided in the dedusting electric field anode 4051 in a penetrating manner.

A method for reducing electric field coupling includes the following steps: selecting the ratio of the dust collection area of the dedusting electric field anode 4051 to the discharge area of the dedusting electric field cathode 4052 to be 1.667:1, an inter-electrode distance between the dedusting electric field anode 4051 and the dedusting electric field cathode 4052 to be 2.4 mm, the length of the dedusting electric field anode 4051 to be 30 mm, and the length of the dedusting electric field cathode 4052 to be 30 mm.The dedusting electric field anode 4051 includes a fluid passage having an entrance end and an exit end.The dedusting electric field cathode 4052 is disposed in the fluid passage and extends in the direction of the fluid passage.An entrance end of the dedusting electric field anode 4051 is flush with a near entrance end of the dedusting electric field cathode 4052, and an exit end of the dedusting electric field anode 4051 is flush with a near exit end of the dedusting electric field cathode 4052.Under the action of the dedusting electric field anode 4051 and the dedusting electric field cathode 4052, more substance to be treated can be collected, the coupling time of the electric field of ≤3 is realized, and coupling consumption of the electric field to aerosols, water mist, oil mist and loose smooth particulates can be reduced, saving the electric energy of the electric field by 10-30%.

In the present embodiment, the substance to be treated can be granular dust and can also be other impurities that need to be treated, such as aerosols, water mist, and oil mist.

### Embodiment 8

As shown in FIG. 9, in the present embodiment, an electric field generating unit, which is applicable to electric field device, includes a dedusting electric field anode 4051 and a dedusting electric field cathode 4052 for generating an electric field. The dedusting electric field anode 4051 and the dedusting electric field cathode 4052 are each electrically connected to a different one of two electrodes of a power supply.The power supply is a direct-current power supply.The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052.This discharge electric field is a static electric field.

As shown in FIG. 9, FIG. 10, and FIG. 11, in the present embodiment, the dedusting electric field anode 4051 is in the shape of a hollow regular hexagonal tube, the dedusting electric field cathode 4052 is in the shape of a rod, and the dedusting electric field cathode 4052 is provided in the dedusting electric field anode 4051 in a penetrating manner. The ratio of the dust collection area of the dedusting electric field anode 4051 to the discharge area of the dedusting electric field cathode 4052 is 6.67:1, an inter-electrode distance between the dedusting electric field anode 4051 and the dedusting electric field cathode 4052 is 9.9 mm. The dedusting electric field anode 4051 has a length of 60 mm, and the dedusting electric field cathode 4052 has a length of 54 mm.The dedusting electric field anode 4051 includes a fluid passage having an entrance end and an exit end.The dedusting electric field cathode 4052 is disposed in the fluid passage and extends in the direction of the fluid passage.An entrance end of the dedusting electric field anode 4051 is flush with a near entrance end of the dedusting electric field cathode 4052. There is an included angle α between an exit end of the dedusting electric field anode 4051 and a near exit end of the dedusting electric field cathode 4052, wherein α=118°.Under the action of the dedusting electric field anode 4051 and the dedusting electric field cathode 4052, more substances to be treated can be collected, ensuring a higher dust collecting efficiency of the present electric field generating unit, with a dust collecting efficiency of 99% for typical exhaust gas particles (PM 0.23 particulate matter).

In the present embodiment, the electric field device includes an electric field stage composed of a plurality of the electric field generating units, and there is a plurality of the electric field stages so as to effectively improve the dust collecting efficiency of the present electric field device utilizing the plurality of dust collecting units. In the same electric field stage, the dedusting electric field anodes have the same polarity as each other, and the dedusting electric field cathodes have the same polarity as each other.

The plurality of electric field stages are connected in series with each other by a connection housing, and the distance between two adjacent electric field stages is greater than 1.4 times the inter-electrode distance. As shown in FIG. 12, there are two electric field stages, i.e., a first-stage electric field 4053 and a second-stage electric field 4054 which are connected in series by the connection housing 4055.

In the present embodiment, the substance to be treated can be granular dust and can also be other impurities that need to be treated, such as aerosols, water mist, and oil mist.

In the present embodiment, the gas can be a gas which is to enter an engine or a gas which has been discharged from an engine.

### Embodiment 9

As shown in FIG. 9, in the present embodiment, an electric field generating unit, which is applicable to electric field device, includes a dedusting electric field anode 4051 and a dedusting electric field cathode 4052 for generating an electric field. The dedusting electric field anode 4051 and the dedusting electric field cathode 4052 are each electrically connected to a different one of two electrodes of a power supply.The power supply is a direct-current power supply.The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052.This discharge electric field is a static electric field.

In the present embodiment, the dedusting electric field anode 4051 is in the shape of a hollow regular hexagonal tube, and the dedusting electric field cathode 4052 is in the shape of a rod.The dedusting electric field cathode 4052 is provided in the dedusting electric field anode 4051 in a penetrating manner. The ratio of the dust collection area of the dedusting electric field anode 4051 to the discharge area of the dedusting electric field cathode 4052 is 1680:1, and the inter-electrode distance between the dedusting electric field anode 4051 and the dedusting electric field cathode 4052 is 139.9 mm. The dedusting electric field anode 4051 has a length of 180 mm.The dedusting electric field cathode 4052 has a length of 180 mm.The dedusting electric field anode 4051 includes a fluid passage having an entrance end and an exit end.The dedusting electric field cathode 4052 is disposed in the fluid passage and extends in the direction of the fluid passage.An entrance end of the dedusting electric field anode 4051 is flush with a near entrance end of the dedusting electric field cathode 4052, and an exit end of the dedusting electric field anode 4051 is flush with a near exit end of the dedusting electric field cathode 4052.Under the action of the dedusting electric field anode 4051 and the dedusting electric field cathode 4052, more substances to be treated can be collected, ensuring a higher dust collecting efficiency of the present electric field device, with a dust collecting efficiency of 99% for typical exhaust gas particles (PM 0.23 particulate matter).

In the present embodiment, the electric field device includes an electric field stage composed of a plurality of the electric field generating units, and there may be a plurality of electric field stages so as to effectively improve the dust collecting efficiency of the electric field device utilizing the plurality of dust collecting units. In the same electric field stage, all of the dedusting electric field anodes have the same polarity as each other, and all of the dedusting electric field cathodes have the same polarity as each other.

In the present embodiment, the substance to be treated can be granular dust and can also be other impurities that need to be treated, such as aerosols, water mist, and oil mist.

### Embodiment 10

As shown in FIG. 9, in the present embodiment, an electric field generating unit, which is applicable to electric field device, includes a dedusting electric field anode 4051 and a dedusting electric field cathode 4052 for generating an electric field. The dedusting electric field anode 4051 and the dedusting electric field cathode 4052 are each electrically connected to a different one of two electrodes of a power supply.The power supply is a direct-current power supply.The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052.This discharge electric field is a static electric field.

In the present embodiment, the dedusting electric field anode 4051 is in the shape of a hollow regular hexagonal tube, and the dedusting electric field cathode 4052 is in the shape of a rod.The dedusting electric field cathode 4052 is provided in the dedusting electric field anode 4051 in a penetrating manner. The ratio of the dust collection area of the dedusting electric field anode 4051 to the discharge area of the dedusting electric field cathode 4052 is 1.667:1, and the inter-electrode distance between the dedusting electric field anode 4051 and the dedusting electric field cathode 4052 is 2.4 mm. The dedusting electric field anode 4051 has a length of 30 mm, and the dedusting electric field cathode 4052 has a length of 30 mm.The dedusting electric field anode 4051 includes a fluid passage having an entrance end and an exit end.The dedusting electric field cathode 4052 is disposed in the fluid passage and extends in the direction of the fluid passage.An entrance end of the dedusting electric field anode 4051 is flush with a near entrance end of the dedusting electric field cathode 4052, and an exit end of the dedusting electric field anode 4051 is flush with a near exit end of the dedusting electric field cathode 4052.Under the action of the dedusting electric field anode 4051 and the dedusting electric field cathode 4052, more substances to be treated can be collected, ensuring a higher dust collecting efficiency of the present electric field device, with a dust collecting efficiency of 99% for typical exhaust gas particles (PM 0.23 particulate matter).

In the present embodiment, the dedusting electric field anode 4051 and the dedusting electric field cathode 4052 constitute a dust collecting unit, and there is a plurality of dust collecting units so as to effectively improve the dust collecting efficiency of the present electric field device utilizing the plurality of dust collecting units.

In the present embodiment, the substance to be treated can be granular dust and can also be other impurities that need to be treated, such as aerosols, water mist, and oil mist.

### Embodiment 11

In the present embodiment, an air dedusting system includes the electric field device of Embodiment 8, Embodiment 9, or Embodiment 10. Air needs to first flow through this electric field device so as to effectively eliminate substances to be treated, such as dust in the air utilizing this electric field device in an aim to ensure the air is still cleaner and contains less impurities such as dust.

### Embodiment 12

As shown in FIG. 9, in the present embodiment, an electric field generating unit, which is applicable to an electric field device, includes a dedusting electric field anode 4051 and a dedusting electric field cathode 4052 for generating an electric field.The dedusting electric field anode 4051 and the dedusting electric field cathode 4052 are each electrically connected to a different one of two electrodes of a power supply. The power supply is a direct-current power supply.The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052.This discharge electric field is a static electric field.

In the present embodiment, the dedusting electric field anode 4051 is in the shape of a hollow regular hexagonal tube, the dedusting electric field cathode 4052 is in the shape of a rod.The dedusting electric field cathode 4052 is provided in the dedusting electric field anode 4051 in a penetrating manner. The dedusting electric field anode 4051 has a length of 5 cm, and the dedusting electric field cathode 4052 has a length of 5 cm.The dedusting electric field anode 4051 includes a fluid passage having an entrance end and an exit end.The dedusting electric field cathode 4052 is disposed in the fluid passage and extends in the direction of the fluid passage.An entrance end of the dedusting electric field anode 4051 is flush with a near entrance end of the dedusting electric field cathode 4052, and an exit end of the dedusting electric field anode 4051 is flush with a near exit end of the dedusting electric field cathode 4052.The inter-electrode distance between the dedusting electric field anode 4051 and the dedusting electric field cathode 4052 is 9.9 mm.Under the action of the dedusting electric field anode 4051 and the dedusting electric field cathode 4052, it is possible to resist high temperature impact, and more substances to be treated can be collected, ensuring a higher dust collecting efficiency of the electric field generating unit. When the electric field has a temperature of 200°C, the corresponding dust collecting efficiency is 99.9%.When the electric field has a temperature of 400 °C, the corresponding dust collecting efficiency is 90%.When the electric field has a temperature of 500 °C, the corresponding dust collecting efficiency is 50%.

In the present embodiment, the electric field device includes an electric field stage composed of a plurality of the above-described electric field generating units, and there is a plurality of electric field stages so as to effectively improve the dust collecting efficiency of the electric field device utilizing the plurality of dust collecting units. In the same electric field stage, all the dedusting electric field anodes have the same polarity as each other, and all the dedusting electric field cathodes have the same polarity as each other.

In the present embodiment, the substance to be treated can be granular dust.

### Embodiment 13

As shown in FIG. 9, in the present embodiment, an electric field generating unit, which is applicable to an electric field device, includes a dedusting electric field anode 4051 and a dedusting electric field cathode 4052 for generating an electric field.The dedusting electric field anode 4051 and the dedusting electric field cathode 4052 are each electrically connected to a different one of two electrodes of a power supply. The power supply is a direct-current power supply.The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052.This discharge electric field is a static electric field.

In the present embodiment, the dedusting electric field anode 4051 is in the shape of a hollow regular hexagonal tube, and the dedusting electric field cathode 4052 is in the shape of a rod.The dedusting electric field cathode 4052 is provided in the dedusting electric field anode 4051 in a penetrating manner. The dedusting electric field anode 4051 has a length of 9 cm, and the dedusting electric field cathode 4052 has a length of 9 cm.The dedusting electric field anode 4051 includes a fluid passage having an entrance end and an exit end.The dedusting electric field cathode 4052 is disposed in the fluid passage and extends in the direction of the fluid passage.An entrance end of the dedusting electric field anode 4051 is flush with a near entrance end of the dedusting electric field cathode 4052, and an exit end of the dedusting electric field anode 4051 is flush with a near exit end of the dedusting electric field cathode 4052.The inter-electrode distance between the dedusting electric field anode 4051 and the dedusting electric field cathode 4052 is 139.9 mm.Under the action of the dedusting electric field anode 4051 and the dedusting electric field cathode 4052, it is possible to resist high temperature impact, and more substances to be treated can be collected, ensuring a higher dust collecting efficiency of the electric field generating unit. When the electric field has a temperature of 200 °C, the corresponding dust collecting efficiency is 99.9%.When the electric field has a temperature of 400 °C, the corresponding dust collecting efficiency is 90%.When the electric field has a temperature of 500 °C, the corresponding dust collecting efficiency is 50%.

In the present embodiment, the electric field device includes an electric field stage composed of a plurality of the above-described electric field generating units.Having a plurality of the electric field stages effectively improves the dust collecting efficiency of the present electric field device utilizing the plurality of dust collecting units. In the same electric field stage, all the dedusting electric field anodes have the same polarity as each other, and all the dedusting electric field cathodes have the same polarity as each other.

In the present embodiment, the substance to be treated can be granular dust.

### Embodiment 14

As shown in FIG. 9, in the present embodiment, an electric field generating unit, which is applicable to an electric field device, includes a dedusting electric field anode 4051 and a dedusting electric field cathode 4052 for generating an electric field.The dedusting electric field anode 4051 and the dedusting electric field cathode 4052 are each electrically connected to a different one of two electrodes of a power supply. The power supply is a direct-current power supply.The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052.This discharge electric field is a static electric field.

In the present embodiment, the dedusting electric field anode 4051 is in the shape of a hollow regular hexagonal tube, and the dedusting electric field cathode 4052 is in the shape of a rod.The dedusting electric field cathode 4052 is provided in the dedusting electric field anode 4051 in a penetrating manner. The dedusting electric field anode 4051 has a length of 1 cm, and the dedusting electric field cathode 4052 has a length of 1 cm.The dedusting electric field anode 4051 includes a fluid passage having an entrance end and an exit end.The dedusting electric field cathode 4052 is disposed in the fluid passage and extends in the direction of the fluid passage.An entrance end of the dedusting electric field anode 4051 is flush with a near entrance end of the dedusting electric field cathode 4052, and an exit end of the dedusting electric field anode 4051 is flush with a near exit end of the dedusting electric field cathode 4052.The inter-electrode distance between the dedusting electric field anode 4051 and the dedusting electric field cathode 4052 is 2.4 mm.Under the action of the dedusting electric field anode 4051 and the dedusting electric field cathode 4052, it is possible to resist high temperature impact, and more substances to be treated can be collected, thereby ensuring a higher dust collecting efficiency of the present electric field generating unit. When the electric field has a temperature of 200°C, the corresponding dust collecting efficiency is 99.9%.When the electric field has a temperature of 400 °C, the corresponding dust collecting efficiency is 90%.When the electric field has a temperature of 500 °C, the corresponding dust collecting efficiency is 50%.

In the present embodiment, the electric field device includes an electric field stage composed of a plurality of the above-described electric field generating units, and there is a plurality of the electric field stages so as to effectively improve the dust collecting efficiency of the present electric field device utilizing the plurality of dust collecting units. In the same electric field stage, all the dedusting electric field anodes have the same polarity as each, and all the dedusting electric field cathodes have the same polarity as each other.

The plurality of electric field stages are connected in series with each other by a connection housing. The distance between two adjacent electric field stages is greater than 1.4 times the inter-electrode distance. There are two electric field stages, i.e., a first-stage electric field and a second-stage electric field which are connected in series by the connection housing.

In the present embodiment, the substance to be treated can be granular dust.

### Embodiment 15

As shown in FIG. 9, in the present embodiment, an electric field generating unit, which is applicable to an electric field device, includes a dedusting electric field anode 4051 and a dedusting electric field cathode 4052 for generating an electric field.The dedusting electric field anode 4051 and the dedusting electric field cathode 4052 are each electrically connected to a different one of two electrodes of a power supply. The power supply is a direct-current power supply.The dedusting electric field anode 4051 and the dedusting electric field cathode 4052 are electrically connected with an anode and a cathode, respectively, of the direct-current power supply. In the present embodiment, the dedusting electric field anode 4051 has a positive potential, and the dedusting electric field cathode 4052 has a negative potential.

In the present embodiment, a specific example of the direct-current power supply is a direct-current, high-voltage power supply. A discharge electric field is formed between the dedusting electric field anode 4051 and the dedusting electric field cathode 4052.This discharge electric field is a static electric field.

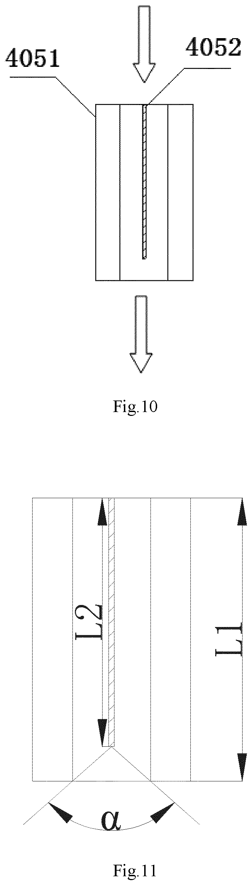

As shown in FIG. 9 and FIG. 10, in the present embodiment, the dedusting electric field anode 4051 is in the shape of a hollow regular hexagonal tube, the dedusting electric field cathode 4052 is in the shape of a rod, and the dedusting electric field cathode 4052 is provided in the dedusting electric field anode 4051 in a penetrating manner. The dedusting electric field anode 4051 has a length of 3 cm, and the dedusting electric field cathode 4052 has a length of 2 cm.The dedusting electric field anode 4051 includes a fluid passage having an entrance end and an exit end.The dedusting electric field cathode 4052 is disposed in the fluid passage and extends in the direction of the fluid passage.An entrance end of the dedusting electric field anode 4051 is flush with a near entrance end of the dedusting electric field cathode 4052.An included angle α is formed between an exit end of the dedusting electric field anode 4051 and a near exit end of the dedusting electric field cathode 4052, wherein α=90°.The inter-electrode distance between the dedusting electric field anode 4051 and the dedusting electric field cathode 4052 is 20 mm.Under the action of the dedusting electric field anode 4051 and the dedusting electric field cathode 4052, it is possible to resist high temperature impact, and more substances to be treated can be collected, ensuring a higher dust collecting efficiency of the present electric field generating unit. When the electric field has a temperature of 200 °C, the corresponding dust collecting efficiency is 99.9%.When the electric field has a temperature of 400 °C, the corresponding dust collecting efficiency is 90%.When the electric field has a temperature of 500 °C, the corresponding dust collecting efficiency is 50%.

In the present embodiment, the electric field device includes an electric field stage composed of a plurality of the above-described electric field generating units, and there is a plurality of the electric field stages so as to effectively improve the dust collecting efficiency of the present electric field device utilizing the plurality of dust collecting units. In the same electric field stage, all the dust collectors have the same polarity as each other, and all the discharge electrodes have the same polarity as each other.

The plurality of electric field stages are connected in series.The serially connected electric field stages are connected by a connection housing.The distance between two adjacent electric field stages is greater than 1.4 times the inter-electrode distance. As shown in FIG. 12, there are two electric field stages, i.e., a first-stage electric field and a second-stage electric field which are connected in series by the connection housing.

In the present embodiment, the substance to be treated can be granular dust.

### Embodiment 16

In the present embodiment, an air dedusting system includes the electric field device of Embodiment 12, Embodiment 13, or Embodiment 14. Air needs to first flow through this electric field device so as to effectively eliminate substances to be treated, such as dust in the air utilizing this electric field device in an aim to ensure the air is still cleaner and contains less impurities such as dust.

### Embodiment 17

In the present embodiment, an electric field device, which is applicable to an air dedusting system, includes a dedusting electric field cathode 5081 and a dedusting electric field anode 5082 electrically connected with a cathode and an anode, respectively, of a direct-current power supply, and an auxiliary electrode 5083 is electrically connected with the anode of the direct-current power supply. In the present embodiment, the dedusting electric field cathode 5081 has a negative potential, and the dedusting electric field anode 5082 and the auxiliary electrode 5083 both have a positive potential.

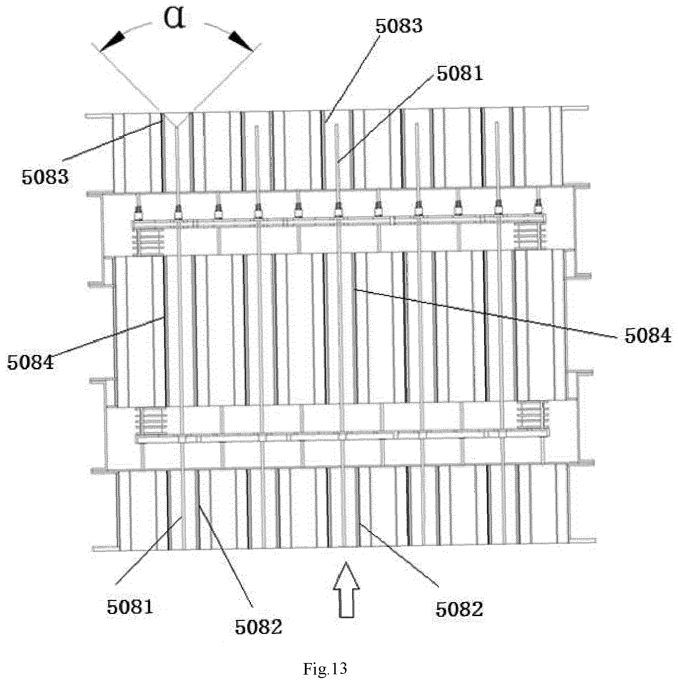

As shown in FIG. 13, the auxiliary electrode 5083 is fixedly connected with the dedusting electric field anode 5082 in the present embodiment. After the dedusting electric field anode 5082 is electrically connected with the anode of the direct-current power supply, the electrical connection between the auxiliary electrode 5083 and the anode of the direct-current power supply is also realized.The auxiliary electrode 5083 and the dedusting electric field anode 5082 have the same positive potential.

As shown in FIG. 13, the auxiliary electrode 5083 can extend in the front-back direction in the present embodiment.Namely, the lengthwise direction of the auxiliary electrode 5083 can be the same as the lengthwise direction of the dedusting electric field anode 5082.

As shown in FIG. 13, in the present embodiment, the dedusting electric field anode 5081 has a tubular shape, the dedusting electric field cathode 5081 is in the shape of a rod, and the dedusting electric field cathode 5081 is provided in the dedusting electric field anode 5082 in a penetrating manner. In the present embodiment, the auxiliary electrode 5083 also has a tubular shape, and the auxiliary electrode 5083 constitutes an anode tube 5084 with the dedusting electric field anode 5082. A front end of the anode tube 5084 is flush with the dedusting electric field cathode 5081, and a rear end of the anode tube 5084 is disposed to the rear of the rear end of the dedusting electric field cathode 5081. The portion of the anode tube 5084 disposed to the rear of the dedusting electric field cathode 5081 is the above-described auxiliary electrode 5083. Namely, in the present embodiment, the dedusting electric field anode 5082 and the dedusting electric field cathode 5081 have the same length as each other, and the dedusting electric field anode 5082 and the dedusting electric field cathode 5081 are positionally relative in a front-back direction.The auxiliary electrode 5083 is located behind the dedusting electric field anode 5082 and the dedusting electric field cathode 5081. Thus, an auxiliary electric field is formed between the auxiliary electrode 5083 and the dedusting electric field cathode 5081.The auxiliary electric field applies a backward force to a negatively charged oxygen ion flow between the dedusting electric field anode 5082 and the dedusting electric field cathode 5081 such that the negatively charged oxygen ion flow between the dedusting electric field anode 5082 and the dedusting electric field cathode 5081 has a backward speed of movement. When the gas containing a substance to be treated flows into the anode tube 5084 from front to back, the negatively charged oxygen ions will be combined with the substance to be treated during the backward movement towards the dedusting electric field anode 5082. As the oxygen ions have a backward speed of movement, when the oxygen ions are combined with the substance to be treated, no stronger collision will be created therebetween, thus avoiding higher energy consumption due to stronger collision, whereby the oxygen ions are more readily combined with the substance to be treated, and the charging efficiency of the substance to be treated in the gas is higher.In addition, under the action of the dedusting electric field anode 5082 and the anode tube 5084, more substances to be treated can be collected, ensuring a higher dedusting efficiency of the present electric field device.

In addition, as shown in FIG. 17, in the present embodiment, there is an included angle α between the rear end of the anode tube 5084 and the rear end of the dedusting electric field cathode 5081, wherein 0 °<α≤125 °, or 45 °≤α≤125 °, or 60 °≤α≤ 100 °, or α=90 °.

In the present embodiment, the dedusting electric field anode 5082, the auxiliary electrode 5083, and the dedusting electric field cathode 5083 constitute a dedusting unit.A plurality of dedusting units is provided so as to effectively improve the dedusting efficiency of the electric field device utilizing the plurality of dedusting units.

In the present embodiment, the substance to be treated can be granular dust and can also be other impurities that need to be treated.

In the present embodiment, a specific example of the direct-current power supply is a direct-current, high-voltage power supply. A discharge electric field is formed between the dedusting electric field cathode 5081 and the dedusting electric field anode 5082.This discharge electric field is a static electric field. In a case where the above-described auxiliary electrode 5083 is absent, an ion flow in the electric field between the dedusting electric field cathode 5081 and the dedusting electric field anode 5082 flows back and forth between the two electrodes, perpendicular to the direction of the electrodes, and causes back and forth consumption of the ions between the electrodes. In view of this, the relative positions of the electrodes are staggered by use of the auxiliary electrode 5083 in the present embodiment, thereby forming a relative imbalance between the dedusting electric field anode 5082 and the dedusting electric field cathode 5081.This imbalance will cause a deflection of the ion flow in the electric field. With use of the auxiliary electrode 5083, the present electric field device forms an electric field that can allow the ion flow to have directivity. In the present embodiment, the above-described electric field device is also referred to as an electric field device having an acceleration direction. For the present electric field device, the collection rate of particulates entering the electric field along the ion flow direction is improved by nearly 100% compared with the collection rate of particulates entering the electric field in a direction countering the ion flow direction, thereby improving the dust accumulating efficiency of the electric field and reducing the power consumption by the electric field. A main reason for the relatively low dedusting efficiency of the prior art dust collecting electric fields is also that the direction of dust entering the electric field is opposite to or perpendicular to the direction of the ion flow in the electric field so that the dust and the ion flow collide violently with each other and generate relatively high energy consumption. In addition,the charging efficiency is also affected, further reducing the dust collecting efficiency of the prior art electric fields and increasing the power consumption.

In the present embodiment, when the electric field device is used to collect dust in a gas, the gas and the dust enter the electric field along the ion flow direction, the dust is sufficiently charged, and the consumption of the electric field is low.The dust collecting efficiency of a unipolar electric field will reach 99.99%. When the gas and the dust enter the electric field in a direction countering the ion flow direction, the dust is insufficiently charged, the power consumption by the electric field will also be increased, and the dust collecting efficiency will be 40%-75%. In the present embodiment, the ion flow formed by the electric field device facilitates fluid transportation, increases the oxygen content, heat exchange and so on by an unpowered fan.

### Embodiment 18

In the present embodiment, an electric field device, which is applicable to an air dedusting system, includes a dedusting electric field cathode 5081 and a dedusting electric field anode 5082 electrically connected with a cathode and an anode, respectively, of a direct-current power supply. Anauxiliary electrode 5083 is electrically connected with the cathode of the direct-current power supply. In the present embodiment, the auxiliary electrode 5083 and the dedusting electric field cathode 5081 both have a negative potential, and the dedusting electric field anode 5082 has a positive potential.

In the present embodiment, the auxiliary electrode 5083 can be fixedly connected with the dedusting electric field cathode 5081. In this way, after the dedusting electric field cathode 5081 is electrically connected with the cathode of the direct-current power supply, the electrical connection between the auxiliary electrode 5083 and the cathode of the direct-current power supply is also realized. The auxiliary electrode 5083 extends in a front-back direction in the present embodiment.

In the present embodiment, the dedusting electric field anode 5082 has a tubular shape, the dedusting electric field cathode 5081 has a rod shape, and the dedusting electric field cathode 5081 is provided in the dedusting electric field anode 5082 in a penetrating manner. In the present embodiment, the above-describedauxiliary electrode 5083 is also rod-shaped, and the auxiliary electrode 5083 and the dedusting electric field cathode 5081 constitute a cathode rod. A front end of the cathode rod is disposed forward of a front end of the dedusting electric field anode 5082, and the portion of the cathode rod that is forward of the dedusting electric field anode 5082 is the auxiliary electrode 5083. That is, in the present embodiment, the dedusting electric field anode 5082 and the dedusting electric field cathode 5081 have the same length as each other, and the dedusting electric field anode 5082 and the dedusting electric field cathode 5081 are positionally relative in a front-back direction. The auxiliary electrode 5083 is located in front of the dedusting electric field anode 5082 and the dedusting electric field cathode 5081. In this way, an auxiliary electric field is formed between the auxiliary electrode 5083 and the dedusting electric field anode 5082.This auxiliary electric field applies a backward force to a negatively charged oxygen ion flow between the dedusting electric field anode 5082 and the dedusting electric field cathode 5081 such that the negatively charged oxygen ion flow between the dedusting electric field anode 5082 and the dedusting electric field cathode 5081 has a backward speed of movement. When the gas containing a substance to be treated flows into the tubular dedusting electric field anode 5082 from front to back, the negatively charged oxygen ions will be combined with the substance to be treated during the backward movement towards the dedusting electric field anode 5082. As the oxygen ions have a backward speed of movement, when the oxygen ions are combined with the substance to be treated, no stronger collision will be created therebetween, thus avoiding higher energy consumption due to stronger collision, where by the oxygen ions are more readily combined with the substance to be treated, and the charging efficiency of the substance to be treated in the gas is higher.Furthermore, under the action of the dedusting electric field anode 5082, more substances to be treated can be collected, ensuring a higher dedusting efficiency of the present electric field device.

In the present embodiment, the dedusting electric field anode 5082, the auxiliary electrode 5083, and the dedusting electric field cathode 5081 constitute a dedusting unit.A plurality of the dedusting units is provided so as to effectively improve the dedusting efficiency of the present electric field device utilizing the plurality of dedusting units.

In the present embodiment, the substance to be treated can be granular dust and can also be other impurities that need to be treated.

### Embodiment 19

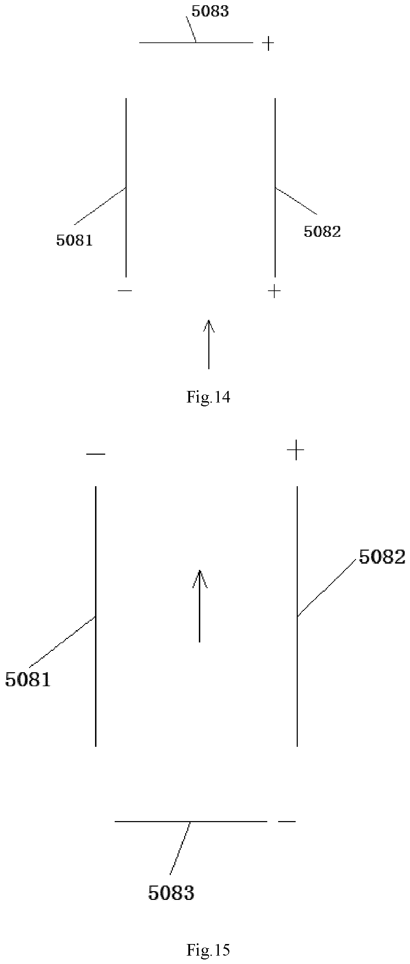

As shown in FIG. 14, in the present embodiment, an electric field device is applicable to angas air dedustingsystem.An auxiliary electrode 5083 extends in a left-right direction. In the present embodiment, the lengthwise direction of the auxiliary electrode 5083 is different from the lengthwise direction of the dedusting electric field anode 5082 and the dedusting electric field cathode 5081. Specifically, the auxiliary electrode 5083 may be perpendicular to the dedusting electric field anode 5082.

In the present embodiment, the dedusting electric field cathode 5081 and the dedusting electric field anode 5082 are electrically connected with a cathode and an anode, respectively, of a direct-current power supply, and the auxiliary electrode 5083 is electrically connected with the anode of the direct-current power supply. In the present embodiment, the dedusting electric field cathode 5081 has a negative potential, and the dedusting electric field anode 5082 and the auxiliary electrode 5083 both have a positive potential.

As shown in FIG. 14, in the present embodiment, the dedusting electric field cathode 5081 and the dedusting electric field anode 5082 are positionally relative in the front-back direction, and the auxiliary electrode 5083 is located behind the dedusting electric field anode 5082 and the dedusting electric field cathode 5081. In this way, an auxiliary electric field is formed between the auxiliary electrode 5083 and dedusting electric field cathode 5081.This auxiliary electric field applies a backward force to a negatively charged oxygen ion flow between the dedusting electric field anode 5082 and the dedusting electric field cathode 5081 such that the negatively charged oxygen ion flow between the dedusting electric field anode 5082 and the dedusting electric field cathode 5081 has a backward speed of movement. When gas containing a substance to be treated flows from front to back into the electric field between the dedusting electric field anode 5082 and the dedusting electric field cathode 5081, the negatively charged oxygen ions will be combined with the substance to be treated during the backward movement towards the dedusting electric field anode 5082. As the oxygen ions have a backward speed of movement, when the oxygen ions are combined with the substance to be treated, no stronger collision will be created therebetween, thus avoiding higher energy consumption due to stronger collision, whereby the oxygen ions are more readily combined with the substance to be treated, and the charging efficiency of the substance to be treated in the gas is higher. In addition, under the action of the dedusting electric field anode 5082, more substances to be treated can be collected, ensuring a higher dedusting efficiency of the present electric field device.

### Embodiment 20

As shown in FIG. 15, in the present embodiment, an electric field device is applicable to an air dedusting system.An auxiliary electrode 5083 extends in a left-right direction. In the present embodiment, the lengthwise direction of the auxiliary electrode 5083 is different from the lengthwise direction of the dedusting electric field anode 5082 and the dedusting electric field cathode 5081. Specifically, the auxiliary electrode 5083 may be perpendicular to the dedusting electric field cathode 5081.

In the present embodiment, the dedusting electric field cathode 5081 and the dedusting electric field anode 5082 are electrically connected with a cathode and an anode, respectively, of a direct-current power supply, and the auxiliary electrode 5083 is electrically connected with the cathode of the direct-current power supply. In the present embodiment, the dedusting electric field cathode 5081 and the auxiliary electrode 5083 both have a negative potential, and the dedusting electric field anode 5082 has a positive potential.

As shown in FIG. 15, in the present embodiment, the dedusting electric field cathode 5081 and the dedusting electric field anode 5082 are positionally relative in a front-back direction, and the auxiliary electrode 5083 is located in front of the dedusting electric field anode 5082 and the dedusting electric field cathode 5081. In this way, an auxiliary electric field is formed between the auxiliary electrode 5083 and the dedusting electric field anode 5082.This auxiliary electric field applies a backward force to a negatively charged oxygen ion flow between the dedusting electric field anode 5082 and the dedusting electric field cathode 5081 such that the negatively charged oxygen ion flow between the dedusting electric field anode 5082 and the dedusting electric field cathode 5081 has a backward speed of movement. When gas containing a substance to be treated flows from front to back into the electric field between the dedusting electric field anode 5082 and the dedusting electric field cathode 5081, the negatively charged oxygen ions will be combined with the substance to be treated during the backward movement towards the dedusting electric field anode 5082. As the oxygen ions have a backward speed of movement, when the oxygen ions are combined with the substance to be treated, no stronger collision will be created therebetween, thus avoiding higher consumption of energy due to stronger collision, whereby the oxygen ions are more readily combined with the substance to be treated, and the charging efficiency of the substance to be treated in the gas is higher.Under the action of the dedusting electric field anode 5082, more substances to be treated can be collected, ensuring a higher dedusting efficiency of the present electric field device.

### Embodiment 21

The air dedusting system of the present embodiment includes the electric field device of Embodiment 17, Embodiment 18, or Embodiment 19 and Embodiment 20. Air needs to first flow through this electric field device so as to effectively eliminate substances to be treated, such as dust in the air utilizing this electric field device in an aim to ensure the air is still cleaner and contains less impurities such as dust.

### Embodiment 22

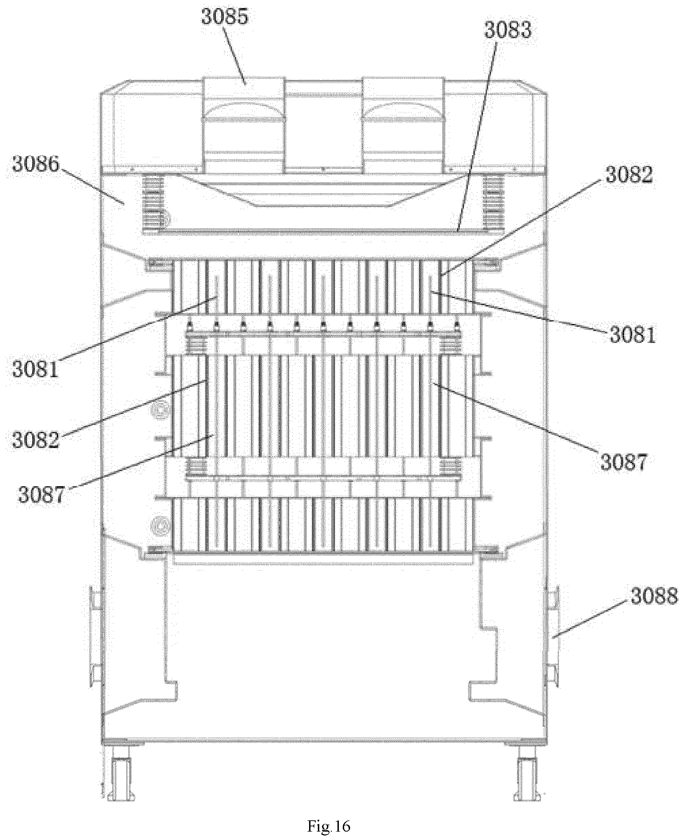

As shown in FIG. 16, the present embodiment provides an electric field device including an electric field device entrance 3085, a flow channel 3086, an electric field flow channel 3087, and an electric field exit 3088 that are in communication with each other in the order listed. A front electrode 3083 is mounted in the flow channel 3086.The ratio of the cross-sectional area of the front electrode 3083 to the cross-sectional area of the flow channel 3086 is 61%-10%. The electric field device further includes a dedusting electric field cathode 3081 and a dedusting electric field anode 3082.The electric field flow channel 3087 is located between the dedusting electric field cathode 3081 and the dedusting electric field anode 3082. In the present embodiment, the working principle of the electric field device is as follows.A pollutant-containing gas enters the flow channel 3086 through the electric field device entrance 3085.The front electrode 3083 mounted in the flow channel 3086 conducts electrons to a part of the pollutants, which are charged.After the pollutants enter the electric field flow channel 3087 through the flow channel 3086, the dedusting electric field anode 3082 applies an attractive force to the charged pollutants. The charged pollutants then move towards the dedusting electric field anode 3082 until this part of the pollutants is attached to the dedusting electric field anode 3082.An ionization dedusting electric field is formed between the dedusting electric field cathode 3081 and the dedusting electric field anode 3082 in the electric field flow channel 3087.The ionization dedusting electric field enables the other part of uncharged pollutants to be charged. In this way, after being charged, the other part of the pollutants will also receive the attractive force applied by the dedusting electric field anode 3082 and is finally attached to the dedusting electric field anode 3082.As a result, by using this electric field device, pollutants are charged at a higher efficiency and are charged more sufficiently, further ensuring that the dedusting electric field anode 3082 can collect more pollutants and ensuring a higher collecting efficiency of pollutants by the electric field device.

The cross-sectional area of the front electrode 3083 refers to the sum of the areas of entity parts of the front electrode 3083 along a cross section. The ratio of the cross-sectional area of the front electrode 3083 to the cross-sectional area of the flow channel 3086 may be 61%-10%, 52-10%, 42-20%, 32-30%, 22-40%, or 50%.

As shown in FIG. 16, in the present embodiment, the front electrode 3083 and the dedusting electric field cathode 3081 are both electrically connected with a cathode of a direct-current power supply, and the dedusting electric field anode 3082 is electrically connected with an anode of the direct-current power supply. In the present embodiment, the front electrode 3083 and the dedusting electric field cathode 3081 both have a negative potential, and the dedusting electric field anode 3082 has a positive potential.

As shown in FIG. 16, in the present embodiment, the front electrode 3083 specifically can have a net shape. In this way, when gas flows through the flow channel 3086, the net-shaped structural characteristic of the front electrode 3083 facilitates flow of gas and pollutants through the front electrode 3083 and allows the pollutants in the gas to contact the front electrode 3083 more sufficiently.As a result, the front electrode 3083 can conduct electrons to more pollutants and allow a higher charging efficiency of the pollutants.

As shown in FIG. 16, in the present embodiment, the dedusting electric field anode 3082 has a tubular shape, the dedusting electric field cathode 3081 has the shape of a rod, and the dedusting electric field cathode 3081 is provided in the dedusting electric field anode 3082 in a penetrating manner. In the present embodiment, the dedusting electric field anode 3082 and the dedusting electric field cathode 3081 have an asymmetrical structure. When gas flows into the ionization electric field formed between the dedusting electric field cathode 3081 and the dedusting electric field anode 3082, the pollutants will be charged, and under the action of the attractive force of the dedusting electric field anode 3082, the charged pollutants will be collected on an inner wall of the dedusting electric field anode 3082.

As shown in FIG. 16, in the present embodiment, the dedusting electric field anode 3082 and the dedusting electric field cathode 3081 both extend in a front-back direction, and a front end of the dedusting electric field anode 3082 is located in front of a front end of the dedusting electric field cathode 3081 in the front-back direction. As shown in FIG. 16, a rear end of the dedusting electric field anode 3082 is located to the rear of a rear end of the dedusting electric field cathode 3081 along the front-back direction. In the present embodiment, the length of the dedusting electric field anode 3082 in the front-back direction is increased such that the area of an adsorption surface located on the inner wall of the dedusting electric field anode 3082 is bigger, thus resulting in a larger attractive force being applied to the negatively charged pollutants and making it possible to collect more pollutants.

As shown in FIG. 16, in the present embodiment, the dedusting electric field cathode 3081 and the dedusting electric field anode 3082 constitute an ionization unit. A plurality of the ionization units is provided so as to collect more pollutants utilizing the plurality of ionization units and allow a greater ability to collect pollutants and a higher collecting efficiency by the electric field device.

In the present embodiment, the above-described pollutants include common dust and the like with relatively weak electrical conductivity, and metal dust, mist drops, aerosols and the like with relatively strong electrical conductivity. In the present embodiment, a process of collecting common dust with relatively weak electrical conductivity and pollutants with relatively strong electrical conductivity by the electric field device is as follows. When gas flows into the flow channel 3086 through the electric field device entrance 3085 and pollutants in the gas with relatively strong electrical conductivity, such as metal dust, mist drops, or aerosols contact the front electrode 3083 or the distance between the pollutants and the front electrode 3083 reaches a certain range, the pollutants will be directly negatively charged. Subsequently, all the pollutants enter the electric field flow channel 3087 with the gas flow, and the dedusting electric field anode 3082 applies an attractive force to the metal dust, mist drops, aerosols, and the like that have been negatively charged and collects this part of the pollutants. The dedusting electric field anode 3082 and the dedusting electric field cathode 3081 form an ionization electric field which obtains oxygen ions by ionizing oxygen in the gas, and the negatively charged oxygen ions, after being combined with common dust, enable common dust to be negatively charged.The dedusting electric field anode 3082 applies an attractive force to this part of the negatively charged dust and collects this part of the pollutants such that all pollutants with relatively strong electrical conductivity and pollutants with relatively weak electrical conductivity in the gas are collected. As a result,this electric field device is capable of collecting a wider variety of substances and has a stronger collecting capability.

In the present embodiment, the dedusting electric field cathode 3081 is also referred to as corona charged electrode. The direct-current power supply specifically is a direct-current, high-voltage power supply. A direct-current high voltage is introduced between the front electrode 3083 and the dedusting electric field anode 3082, forming an electrically conductive loop.A direct-current high voltage is introduced between the dedusting electric field cathode 3081 and the dedusting electric field anode 3082 and forms an ionization discharge corona electric field. In the present embodiment, the front electrode 3083 is a densely distributed conductor. When the easily charged dust passes through the front electrode 3083, the front electrode 3083 gives electrons directly to the dust.The dust is charged and is subsequently adsorbed by the heteropolar dedusting electric field anode 3082.The uncharged dust passes through an ionization zone formed by the dedusting electric field cathode 3081 and the dedusting electric field anode 3082, and the ionized oxygen formed in the ionization zone will charge the dust with electrons.In this way, the dust continues to be charged and is adsorbed by the heteropolar dedusting electric field anode 3082.

In the present embodiment, the electric field device can operate in two or more electrifying modes. For example, in the case where there is sufficient oxygen in the gas, the ionization discharge corona electric field formed between the dedusting electric field cathode 3081 and the dedusting electric field anode 3082 can be used to ionize oxygen so as to charge pollutants and then collect the pollutants using the dedusting electric field anode 3082.When the content of oxygen in the gas is too low or when there is no oxygen, or when the pollutants are electrically conductive dust mist and the like, the front electrode 3083 is used to directly enable the pollutants to be charged such that the pollutants are sufficiently charged and then adsorbed by the dedusting electric field anode 3082. In the present embodiment, through use of the electric field with two charging modes, it is possible to simultaneously collect high-resistance dust which is easily charged and low-resistance metal dust, aerosols, liquid mist, etc. which are easily electrified. The electric field has an expanded scope of application due to simultaneous use of the two electrifying modes.

In conclusion, the present invention effectively overcomes various defects in the prior art and has high industrial utilization value.

The above embodiments merely illustratively describe the principles of the present invention and effects thereof, rather than limiting the present invention. Anyone familiar with this technology can modify or change the above embodiments without departing from the spirit and scope of the present invention. Therefore, all equivalent modifications or changes made by those with ordinary knowledge in the technical field to which they belong without departing from the spirit and technical ideas disclosed in the present invention should still be covered by the claims of the presentapplication.For example, in the present, "air" has a broad definition that includes all kinds of gas including exhaust, exhaust gas.Therefore, the scope of protection of the present claim(e.g., "air dedusting system," "air electric field dedusting method," "method for increasingoxygen for the air" "air dedusting method") shall include all gases.

## Claims

1. A method for reducing coupling of the air dedusting electric field, including selecting the ratio of the dust accumulation area of the dedusting electric field anode to the discharge area of the dedusting electric field cathode to be 1.667: 1-1680: 1.

2. The method for reducing coupling of the air dedusting electric field according to claim 1, including selecting the ratio of the dust accumulation area of the dedusting electric field anode to the discharge area of the dedusting electric field cathode to be 6.67: 1-56.67: 1.

3. The method for reducing coupling of the air dedusting electric field according to any one of claim 1 or 2, wherein the dedusting electric field cathode has a diameter of 1-3 mm, the inter-electrode distance between the dedusting electric field anode and the dedusting electric field cathode is 2.5-139.9mm, and the ratio of the dust accumulation area of the dedusting electric field anode to the discharge area of the dedusting electric field cathode is 1.667: 1-1680: 1.

4. The method for reducing coupling of the air dedusting electric field according to any one of claim 1 to 3, wherein the inter-electrode distance between the dedusting electric field anode and the dedusting electric field cathode to be less than 150 mm.

5. The method for reducing coupling of the air dedusting electric field according to any one of claim 1 to 3, wherein selecting the inter-electrode distance between the dedusting electric field anode and the dedusting electric field cathode to be 2.5∼139.9mm.

6. The method for reducing coupling of the air dedusting electric field according to any one of claim 1 to 3, wherein selecting the inter-electrode distance between the dedusting electric field anode and the dedusting electric field cathode to be 5-100mm.

7. The method for reducing coupling of the air dedusting electric field according to any one of claim 1 to 6, wherein selecting the size of the dedusting electric field anode or/and the dedusting electric field cathode to allow the coupling time of the electric field to be ≤3.
